(19) Europäisches Patentamt
European Patent Office
Office européen des brevets

(11) **EP 2 930 865 B1**

(12) **EUROPEAN PATENT SPECIFICATION**

(45) Date of publication and mention
of the grant of the patent:
**06.06.2018  Bulletin 2018/23**

(51) Int Cl.:
***H04B 10/61*** [(2013.01)]

(21) Application number: **14305505.1**

(22) Date of filing: **07.04.2014**

(54) **Transmitter quadrature imbalance compensation at a coherent optical receiver**

Senderquadratur-Ungleichgewichtsausgleich an einem kohärenten optischen Empfänger

Compensation de déséquilibre en quadrature d'un émetteur à un récepteur optique cohérent

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.10.2015  Bulletin 2015/42**

(73) Proprietor: **Alcatel Lucent
91620 Nozay (FR)**

(72) Inventors:
• **Gavioli, Giancarlo
20059 VIMERCATE (IT)**
• **Razzetti, Luca
20059 VIMERCATE (IT)**
• **Pepe, Marianna
20059 VIMERCATE (IT)**
• **Costantini, Carlo
20059 VIMERCATE (IT)**

(74) Representative: **Wetzel, Emmanuelle et al
Nokia Solutions and Networks GmbH & Co. KG
Lorenzstraße 10
70435 Stuttgart (DE)**

(56) References cited:
• **AL AMIN A ET AL: "Effect of hybrid IQ imbalance compensation in 27.3-Gbit/s direct-detection OFDM transmission", OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467967, ISBN: 978-1-4244-2606-5**
• **MAURIZIO MAGARINI ET AL: "Pilot-Symbols-Aided Carrier-Phase Recovery for 100-G PM-QPSK Digital Coherent Receivers", IEEE PHOTONICS TECHNOLOGY LETTERS, IEEE SERVICE CENTER, PISCATAWAY, NJ, US, vol. 24, no. 9, 1 May 2012 (2012-05-01), pages 739-741, XP011440747, ISSN: 1041-1135, DOI: 10.1109/LPT.2012.2187439**
• **HWAN SEOK CHUNG ET AL: "Effect of IQ Mismatch Compensation in an Optical Coherent OFDM Receiver", IEEE PHOTONICS TECHNOLOGY LETTERS, IEEE SERVICE CENTER, PISCATAWAY, NJ, US, vol. 22, no. 5, 1 March 2010 (2010-03-01), pages 308-310, XP011300029, ISSN: 1041-1135**

EP 2 930 865 B1

## Description

### Technical field

The present invention relates to the field of optical communication networks. More particularly, the present invention relates to the compensation of transmitter quadrature imbalances at a coherent optical receiver for a node of an optical communication network.

### Background art

As known, current 100 Gb/s transceivers for optical communication networks employ Polarization-Multiplexed Quadrature-Amplitude-Modulation (PM-QAM) schemes and intra-dyne coherent receivers.

According to a PM-QAM scheme, information (digital) data are transmitted using two different polarizations and, for each polarization, over an in-phase component (I-component) and a quadrature component (Q-component) of an optical signal. Each optical signal may indeed be expressed as

$$s(t)=I\cos(2\pi ft) + Q\sin(2\pi ft) \qquad [1]$$

where f is the frequency of the optical signal, $I = A\cos\theta$ is the I-component and $Q = A\sin\theta$ is the Q-component. At the transmitter, for modulating the optical signal, the information data are mapped to modulation symbols, each symbol being assigned to a given pattern of bits. The symbols carrying information data are usually referred to as information symbols. Usually, patterns of m bits are mapped into a symbol set of size $M=2^m$. Symbols are typically represented as points of a two-dimensional diagram known as constellation diagram. Each point has a corresponding amplitude and a corresponding phase. For QAM schemes, the constellation points are typically arranged in a multilevel grid within the complex plane, or I-Q plane, each point being represented by the 1-component as a coordinate along the in-phase axis and by the Q-component as a coordinate along the quadrature axis.

In an intra-dyne receiver, the incoming polarization-multiplexed optical signal is mixed by means of a polarization and phase diversity optical front-end with the signal emitted by a local laser. The local laser frequency is not locked to the incoming signal but might slightly differ by a value much smaller than the modulation symbol rate. The optical front-end typically comprises a pair of optical 90° hybrids, one for each polarization. Each optical 90° hybrid recovers components of the received optical signal at a corresponding polarization. These components basically correspond to the components of the optical signal at the output of the transmitter except for noise and/or distortion introduced by propagation of the modulated optical signal along the optical link and/or by processing of the received optical signal at the receiver. The components then undergo photoelectric conversion and are mapped into electric signals. The next stage is to convert the electric (analog) signal into digital signals. This is performed by an analog-to-digital converter (ADC), which comprises a sampler that samples the electric signals at a rate equal to or higher than the symbol rate used by the transmitter.

The sampled electric signals are digitally processed for channel equalization and demodulation. Channel equalization compensates for transmission impairments such as chromatic dispersion, polarization rotations and polarization mode dispersion (PMD). Demodulation includes estimating the residual carrier phase (this operation is typically referred to as "carrier recovery"). Known algorithms for the carrier recovery include feedforward techniques such the technique described in T. Pfau, S. Hoffmann and R. Noé, "Hardware-efficient coherent digital receiver concept with feedforward carrier recovery for M-QAM; constellations", Journal of Lightwave Technology, vol. 27, no. 8, April 15, 2009, pages 989-999.

Carrier recovery is followed by a symbol de-mapper stage, which performs symbol to bit conversion, and by a decoding stage which could be based on a hard-decision forward error correction (FEC). Other schemes are based on a soft-decision forward error correction according to which decoding is performed on the basis of information indicating the reliability of the outcome of symbol decision. As known, this information may take the form of log-likelihood ratios (LLRs).

Ideally, the 1-component and the Q-component of a transmitted optical signal are orthogonal to each other. However, in real transceivers, components' implementation imperfections, including incorrect or sub-optimal settings and operating points, can create imbalances between the 1-component and the Q-component (referred to in the following as "quadrature imbalances"). These quadrature imbalances comprise quadrature amplitude imbalances which result in unequal gain and dc-offsets between the two quadrature components, and quadrature phase imbalances which result in a phase skew between the two quadrature components and compromise the orthogonality between the 1-component and the Q-component. As a result, the receiver decision margins are decreased and the overall system performance degraded. Furthermore, quadrature amplitude imbalances compromise (up to complete failure) the carrier recovery algorithms employed by receiver for demodulation of high-order QAM schemes, which rely on symbol coordinate decision.

In particular, quadrature imbalances can be introduced by impairments at both the transmitter side and the receiver side. At the receiver side, quadrature imbalances can be introduced by photodiodes responsivity mismatch, misadjustments of polarization circuits, imperfect splitting ratio of couplers as well as imperfections in the optical 90° hybrids. At the transmitter side, quadrature imbalances can be introduced by imperfect splitting ratio of couplers, incorrect bias points settings for the I-, Q- and phase ports of the modulators, impedance mismatch between the modulators and the electrical driver radio-frequency inputs, or variations in the voltage output levels of the electrical drivers.

Methods for compensating quadrature imbalances introduced in particular by the optical 90° hybrid circuits at the receiver side are known, e.g. from I. Fatadin, S.J. Savory and D. Ives, "Compensation of quadrature imbalance in an optical QPSK coherent receiver", IEEE Photonics Technology Letters, vol. 20, no. 20, October 15, 2008, pages 1733-1735. This method uses a Gram-Schmidt orthogonalization procedure (GSOP) to correct for nonorthogonality of the I-, Q-components after analog-to-digital conversion at the receiver.

Al Amin A. et al.:" Effect of hybrid IQ imbalance compensation in 27.3-Gbit/s direct-detection OFDM transmission", Optical Fiber Communication - incudes post deadline papers, 2009, OFC 2009, Conference on, IEEE, Piscataway, NJ, USA, 22 March 2009, pages 1-3, discloses a hybrid compensation method for transmitter and receiver IQ imbalance in high capacity OFDM.

Maurizio Magarini et al.: " Pilot-symbols-aided carrier-phase recovery for 100-G PM-QPSK digital coherent receivers," IEEE Photonics Technology Letters, IEEE Service Center, Piscataway, NJ, US, vol. 24, no. 9, May 2012, pages 739-741, discloses a feedforward pilot-symbols-aided carrier-phase recovery scheme. The approach relies on pilot symbols that are time-division multiplexed with the transmitted data. In the scheme, an initial coarse estimation of the optical carrier phase, exploiting the knowledge of pilot symbols, is followed by a fine nondata-aides, or blind, estimation.

### Summary of the invention

The inventors noticed that the known schemes for compensating quadrature imbalances introduced at the receiver side are not effective for handling impairments introduced on the quadrature components at the transmitter side. If left uncompensated, these impairments can cause severe sensitivity penalties, especially for high-order QAM formats such as 64-QAM.

In view of the above, it is an object of the present invention to provide an apparatus and a method for compensating, at a coherent optical receiver, the quadrature imbalances introduced at the transmitter side.

In the following description and in the claims, the expression "incoming (pilot) symbol" or "input (pilot) symbol" when used with reference to an apparatus, block, module, device, circuit, unit, etc. will indicate the symbol at the input of such apparatus, block, module, device, circuit, unit, etc., irrespective of the processing that the symbol has undergone before such apparatus, block, module, device, circuit, unit, etc. The expression "outgoing symbol" or "output symbol" will indicate a symbol at the output of such apparatus, block, module, device, circuit, unit, etc. Correspondingly, the expression "input I-, Q-component" will indicate the I-, Q- component of an incoming symbol, while the expression "output I-, Q- component" will indicate the I-, Q-component of an output symbol.

According to a first aspect, the present invention provides an apparatus for compensating transmitter quadrature imbalances over an optical signal received at an optical coherent receiver of a node of an optical communication network, the optical signal comprising a sequence of symbols comprising received information symbols and received pilot symbols, the receiver being configured to store a sequence of reference pilot symbols, the apparatus comprising:

- an absolute phase estimating circuit configured to estimate a phase error between a received pilot symbol and a corresponding pilot symbol of the sequence of reference pilot symbols;
- a phase correcting module configured to remove said phase error from the received pilot symbol and a number of received information symbols associated with the received pilot symbol;
- a quadrature imbalance detection circuit configured to estimate the transmitter quadrature imbalances on the basis of at least the phase-corrected pilot symbol; and
- a quadrature imbalance compensation circuit configured to compensate the estimated transmission quadrature imbalances over the number of phase-corrected information symbols.

Preferably, the absolute phase estimating circuit comprises a maximum likelihood sequence estimator based on the Viterbi algorithm.

Alternatively, the absolute phase estimating circuit comprises a maximum a posteriori probability detector.

According to embodiments of the present invention, the absolute phase estimating circuit comprises a complex multiplier and a filter, the complex multiplier being configured to multiply incoming symbols with a complex conjugate of a zero-padded sequence of reference pilot symbols for computing a difference between the phase of incoming pilot symbols and the phase of the corresponding reference pilot symbols, and wherein the filter is a moving average interpolation filter configured to filter a resulting sequence.

In conformity with the definition given in the foregoing, the expression "incoming symbols" here above indicates the symbols at the input of the complex multiplier, and similarly the expression "incoming pilot symbol" here above indicates the pilot symbol at the input of the complex multiplier. It will be appreciated that, according to a second embodiment of the present invention, these "incoming (pilot) symbols" are symbols that have been processed by a channel equalizer and a frequency estimation block of a demodulator.

Preferably, the phase correcting module comprises a complex multiplier configured to multiply incoming symbols by a complex number whose argument is the phase error. The incoming symbols at the input of the phase correcting module may be either demodulated symbols, according to e.g. a first embodiment of the present invention, or symbols that have been processed by a channel equalizer and a frequency estimation block of a demodulator, according to e.g. a second embodiment of the present invention.

Preferably, the quadrature imbalance compensation circuit and the quadrature imbalance detection circuit implement a decision feedback adaptive equalizer wherein the quadrature imbalance detection circuit is configured to update a number of coefficients used in the quadrature imbalance compensation circuit.

More preferably, the quadrature imbalance compensation circuit comprises an offset compensation module configured to correct a transmitter quadrature dc-offset imbalance, a gain compensation module configured to correct a transmitter quadrature gain imbalance, and a phase skew compensation module configured to correct a transmitter quadrature phase imbalance.

Preferably, the offset compensation module comprises a first real-valued adder and a second real-valued adder and the number of coefficients comprise an in-phase offset coefficient and a quadrature offset coefficient, the first real-valued adder being configured to add the in-phase offset coefficient to an in-phase component of an incoming symbol, and the second real-valued adder being configured to add the quadrature offset coefficient to a quadrature component of the incoming symbol.

Preferably, the gain compensation module comprises a first real-valued multiplier and a second real-valued multiplier and the number of coefficients comprise an in-phase gain coefficient and a quadrature gain coefficient, the first real-valued multiplier being configured to multiply an in-phase component of an incoming symbol by the in-phase gain coefficient, and the second real-valued multiplier being configured to multiply a quadrature component of an incoming symbol by the quadrature gain coefficient.

Preferably, the phase skew compensation module comprises four real-valued multipliers and two adders and the number of coefficients comprise four coefficients, the four real-valued multipliers being configured to multiply an in-phase component and a quadrature component of an incoming symbol by the four coefficients and to add the products of the multiplications for providing an in-phase component and a quadrature component of an output symbol according to the following equations:

$$I\_o(k)=h11\cdot I''(k)+h21\cdot Q''(k)$$

$$Q\_o(k)=h12\cdot I''(k)+h22\cdot Q''(k)$$

wherein h11, h21, h12, h22 are the four coefficients, I"(k) is the in-phase component, Q"(k) is the quadrature component and I_o(k) is the in-phase component of the output symbol and Q_o(k) is the quadrature component of the output symbol.

According to an embodiment of the present invention, the quadrature imbalance compensation circuit is configured to compute metric information for a soft-decision FEC decoding.

Preferably, the apparatus of the present invention further comprises a phase restoring module configured to perform an inverse operation with respect to the phase correcting module.

According to a second aspect, the present invention provides a digital processing unit for an optical coherent receiver for a node of an optical network, the digital processing unit comprising a demodulator comprising a frequency estimation block and a phase estimation block, and an apparatus as set forth above for compensating transmitter quadrature imbalances over an optical signal received at the optical coherent receiver.

Preferably, the apparatus is arranged within the digital processing unit after the phase estimation block of the demodulator.

According to further embodiments, the apparatus is arranged within the digital processing unit before the phase estimation block of the demodulator.

According to even further embodiments, a first portion of the apparatus is arranged within the digital processing unit before the demodulator and a second portion of the apparatus is arranged within the digital processing unit after the demodulator, wherein the first portion comprises a first portion of the quadrature imbalance compensation circuit comprising an offset compensation module configured to correct a transmitter quadrature dc-offset imbalance, and the second portion comprises a second portion of the quadrature imbalance compensation circuit comprising a gain compensation module configured to correct a transmitter quadrature gain imbalance and a phase skew compensation module configured to correct a transmitter quadrature phase imbalance.

According to a third aspect, the present invention provides an optical coherent receiver comprising a digital processing unit as set forth above.

According to a fourth aspect, the present invention provides a method for compensating transmitter quadrature imbalances over an optical signal received at an optical coherent receiver of a node of an optical communication network, the optical signal comprising a sequence of symbols comprising received information symbols and received pilot symbols, the method comprising:

- estimating a phase error between a received pilot symbol and a corresponding pilot symbol of a sequence of reference pilot symbols;
- removing the phase error from the received pilot symbol and a number of received information symbols associated with the received pilot symbol;
- estimating the transmitter quadrature imbalances on the basis of at least the phase-corrected pilot symbol; and
- compensating the detected transmission quadrature imbalances over the number of phase-corrected information symbols.

According to a fifth aspect, the present invention provides a computer program product comprising computer-executable instructions for performing, when the program is run on a computer, the steps of the method as set forth above.

## Brief description of the drawings

The present invention will become clearer by reading the following detailed description, given by way of example and not of limitation, to be read by referring to the accompanying drawings, wherein:

- Figure 1 schematically shows an optical coherent receiver according to embodiments of the present invention;
- Figure 2 schematically shows a digital processing unit for the optical coherent receiver of Figure 1 according to an embodiment of the present invention;
- Figure 3 schematically shows a portion of the digital processing unit of Figure 1 comprising a portion of a demodulator and a block for the compensation of transmitter quadrature imbalances;
- Figure 4 schematically shows a circuit for the compensation of the transmitter quadrature imbalances according to embodiments of the present invention;
- Figures 5a and 5b graphically show the Q factor against the signal to noise ratio (SNR) for an exemplary 64QAM scheme due to amplitude transmitter quadrature imbalances without compensation thereof;
- Figures 5c and 5d graphically show the Q factor against the SNR for the exemplary 64QAM scheme due to amplitude transmitter quadrature imbalances after compensation according to the first embodiment of the present invention;
- Figure 6 schematically shows a block for the compensation of transmitter quadrature imbalances according to a second embodiment of the present invention;
- Figure 7a and 7b show graphs reporting the Q factor against the SNR for the exemplary 64QAM scheme due to amplitude transmitter quadrature imbalances after compensation according to the second embodiment of the present invention;
- Figure 8 schematically shows a block for the compensation of transmitter quadrature imbalances according to a third embodiment of the present invention;
- Figure 9 schematically shows a block for the compensation of transmitter quadrature imbalances according to a fourth embodiment of the present invention; and
- Figure 10 is a flowchart of a method for compensating transmitter quadrature imbalances according to the embodiments of the present invention.

## Detailed description of preferred embodiments of the invention

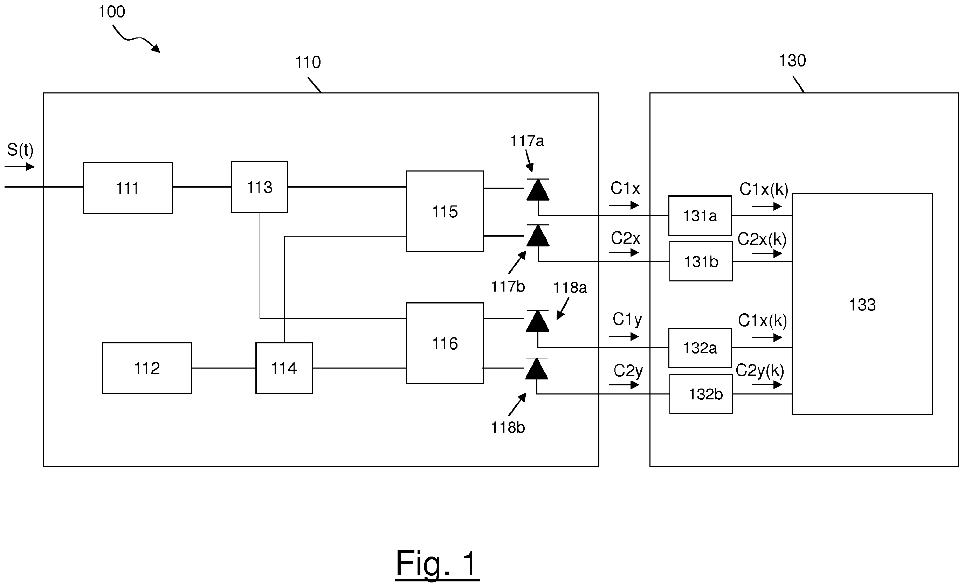

Figure 1 schematically shows an optical coherent receiver 100 according to embodiments of the present invention. Preferably, the optical coherent receiver 100 is an intra-dyne optical coherent receiver.

The receiver 100 is preferably configured to receive from a transmitter (not shown in the Figures) an optical signal modulated according to a digital modulation scheme. Preferably, the digital modulation scheme is a PM-QAM (polarization-multiplexed quadrature amplitude modulation) scheme, such as a PM-64QAM scheme. In the following, for sake of non limiting example, it is assumed that the optical signal is modulated according to a PM-QAM scheme. Preferably, the optical signal is a wavelength-division multiplexed (WDM) signal.

The receiver 100 preferably comprises a polarization and phase diversity optical front-end 110 and a digital circuit 130, connected in cascade. The optical front-end 110 preferably comprises a filter 111, a local laser 112, a first polarization beam splitter 113, a second polarization beam splitter 114, a first optical 90° hybrid 115, a second optical 90° hybrid 116 and four balanced-photodiodes 117a, 117b, 118a, 118b.

In operative conditions, the receiver 100, in particular its optical front-end 110, preferably receives an incoming optical signal S(t). According to embodiments of the present invention, the incoming optical signal S(t) carries both information symbols and pilot symbols with a symbol rate fs. Each pilot symbol preferably comprises a known sequence of bits. Preferably, information symbols and pilot symbols are arranged in a time-multiplexed manner in the optical signal S(t). Preferably, pilot symbols are periodically inserted within the optical signal S(t) with a rate fp much smaller than the symbol rate fs. Preferably, the rate of the pilot symbols ranges from $10^{-4}$ to $10^{-1}$. Preferably, a sequence of reference pilot symbols periodically inserted by the transmitter within the optical signal to be transmitted at time multiples of a pilot symbol period 1/fp is known at the receiver 100.

The incoming optical signal S(t) is preferably filtered by the filter 111. The filter 111 is preferably a known channel selector filter. It may select a single wavelength from a WDM signal. Usually it is realized with an array-waveguide grating (AWG) and exhibits Gaussian profile with a bandwidth proportional to the symbol rate (typical ranging from 33GHz to 200GHz). In this case, the filter 111 preferably selects a single wavelength λ from the received optical signal S(t).

Then, at the output of the filter 111, the filtered optical signal is mixed, in the polarization and phase diversity optical front-end 110, with a light beam emitted by the local laser 112.

It is to be noticed that typically the incoming optical signal S(t) has arbitrary polarization, phase and frequency with respect to the local laser 112. In particular, the local laser frequency is not locked to the incoming signal but might slightly differ by a value much smaller than the symbol rate fs. The optical front end 110 separates the incoming signal S(t) into two components associated with two reference polarization axes of the receiver, i.e. two reference polarization axes of the first polarization beam splitter 113. Each signal component at the output of the polarization beam splitter 113 is combined with the light beam from the local laser 112 and then separated into two phase-orthogonal components using a 90° hybrid circuit, as it will be described herein after. It is then the task of a digital equalizer and a demodulator in the digital circuit 130 to recover from these four signals the I- and Q-components of the two polarizations of the received signal, as it will be clearer herein after.

In particular, the filtered optical signal S(t) is fed to the first beam splitter 113 and is split into two beams of differing polarizations associated with the reference polarization axes of the receiver, which will be indicated as X, Y. Accordingly, these polarizations are referred to, in the following, as X-polarization and Y-polarization. One beam (e.g. the X-polarized beam) is fed to the first optical 90° hybrid 115 and the other beam (e.g. the Y-polarized beam) is fed to the second optical 90° hybrid 116. Similarly, the light beam coming from the local laser 112 is fed to the second beam splitter 114 with 45° polarization angle and is split into two beams of differing polarizations (the same X-polarization and Y-polarization as above). One beam (the X-polarized beam) is fed to the first optical 90° hybrid 115 and the other beam (the Y-polarized beam) is fed to the second optical 90° hybrid 116. In other words, each optical 90° hybrid 115, 116 processes beams of a corresponding polarization.

Each optical 90° hybrid 115, 116 performs, for the corresponding polarization, the beating between the beam resulting from the splitting of the incoming signal S(t) and the beam resulting from the splitting of the light beam generated by the local laser 112. As known, this leads to separating two phase-orthogonal components of the received optical signal S(t) for each polarization. In particular, the first optical 90° hybrid 115 recovers phase-orthogonal components of the received optical signal S(t) for the X-polarization and the second optical 90° hybrid 116 recovers phase orthogonal components of the received optical signal S(t) for the Y-polarization.

The phase-orthogonal components for both polarizations undergo photoelectric conversion within the photodiodes 117a, 117b, 118a, 118b. Each photodiode 117a, 117b, 118a, 118b emits an electric signal for the respective component. The electric signals associated with the phase-orthogonal components for the X-polarization are emitted by the photodiodes 117a, 117b and indicated as C1x, C2x, while, similarly, the electric signals associated with the phase-orthogonal components for the Y-polarization are emitted by the photodiodes 118a, 118b and indicated as C1 y, C2y in Figure 1. After photoelectric conversion the electric signals C1 x, C2x, C1 y, C2y are fed to the digital circuit 130.

The digital circuit 130 preferably comprises four analog-to-digital converters 131a, 131b, 132a, 132b and a digital processing unit 133. The digital circuit 130 is preferably implemented as a digital signal processor (DSP) inside an application-specific integrated circuit (ASIC).

The four analog-to-digital converters 131a, 131b, 132a, 132b preferably process in parallel the electric signals associated with the phase-orthogonal components for the X-polarization, C1 x and C2x, and the electric signals associated with the phase-orthogonal components for the Y-polarization, C1y and C2y. Each analog-to-digital converter 131a, 131b, 132a, 132b preferably samples a respective component signal C1 x, C2x, C1 y, C2y and quantizes the samples so that each sample takes on a value within a finite set, which is determined by the bits of resolution in the analog-to-digital converter 131a, 131b, 132a, 132b. The sequences of quantized samples of the different component signals at the output of the analog-to-digital converters 131a, 131b, 132a, 132b are indicated in Figure 1 by references C1 x(k), C2x(k), C1y(k) and C2y(k), respectively, where k is an integer numerical index indicative of the sampling intervals. Preferably the phase-orthogonal component signals C1x, C2x, and C1y, C2y are sampled at a rate equal to the symbol rate fs or higher.

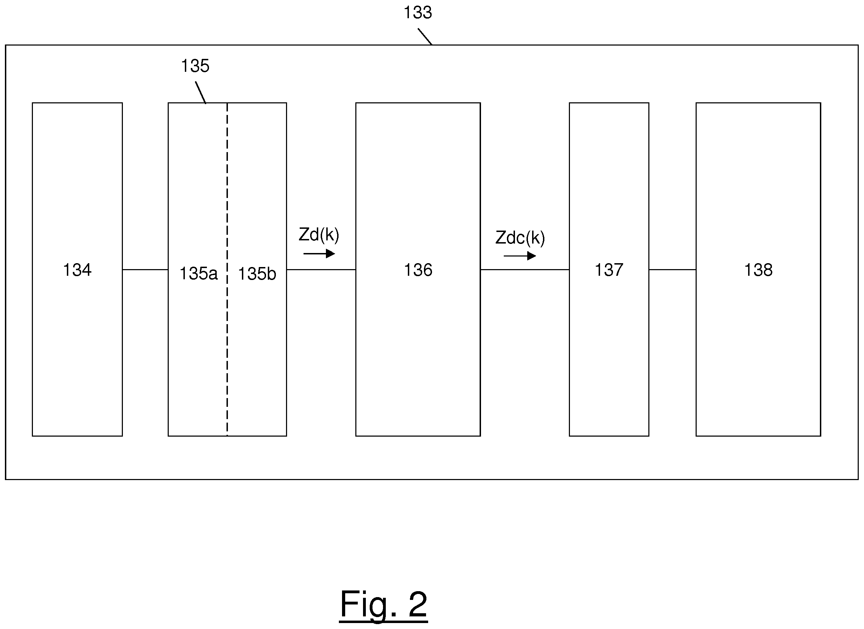

Figure 2 schematically shows a digital processing unit 133 according to an embodiment of the present invention. The digital processing unit 133 preferably comprises a channel equalizer 134, a demodulator 135, a transmitter imbalance compensation block 136, a de-mapper 137 and a decoder 138.

In operative conditions, after analog-to-digital conversion, the phase orthogonal component samples (or, digital signals) C1 x(k), C2x(k) and C1 y(k), C2y(k) are fed to the channel equalizer 134. The channel equalizer 134 preferably implements known mechanisms for channel equalization, i.e. for compensating transmission impairments such as chromatic dispersion, polarization rotations and polarization mode dispersion (PMD). Therefore, the channel equalizer 134 preferably processes the four digital signals C1x(k), C2x(k) and C1y(k), C2y(k) so that it outputs two complex signals corresponding to the two polarization-multiplexed signals modulated at the transmitter side. Moreover, after channel equalization, samples that are sampled at a sampling rate equal to the symbol rate fs are obtained. The two complex signals at the channel equalizer output will require demodulation to recover phase and frequency drifts between the local laser and the transmitter laser. Demodulation can be performed by two parallel circuits processing each of the two equalizer outputs.

With reference to the block scheme of Figure 1, it is appreciated that the channel equalizer 134 is "in common" for the two polarizations (which are still combined to this point) and then the receiver processes the two polarizations independently and in parallel, each polarization being processed by a demodulator 135, a transmitter imbalance compensation block 136, a de-mapper 137 and a decoder 138.

The demodulator 135 preferably implements a known technique for carrier recovery. Carrier recovery comprises frequency estimation (performed by a frequency estimation block 135a) and phase estimation (performed by a phase estimation block 135b). Frequency estimation recovers the frequency error between the local laser 112 and the transmitter laser. Phase estimation recovers the phase error of the local laser 112 with respect to the transmitter laser and the channel.

An exemplary known algorithm for frequency estimation is described in A. Leven, et al., "Frequency estimation in intradyne reception" IEEE, Photonics Technology Letters, vol. 19, 2007, pp. 366-368.

An exemplary known algorithm for phase estimation is described in T. Pfau, S. Hoffmann and R. Noé, "Hardware-efficient coherent digital receiver concept with feedforward carrier recovery for M-QAM; constellations", Journal of Lightwave Technology, vol. 27, no. 8, April 15, 2009, pages 989-999.

The demodulator 135, in particular, the phase estimation block 135b, preferably outputs a sequence of demodulated symbols Zd(k) including demodulated information symbols and demodulated pilot symbols. In the following description and in the claims, the notations "Zd(k)", "Id(k)" and "Qd(k)" will indicate, respectively, a demodulated symbol, the corresponding I-component and the corresponding Q-component for any of two considered polarizations. Indeed, in the following description, only one polarization will be considered, since processing of the demodulated symbols related to the other polarization is similar.

It is to be noticed that the demodulator 135, as known, may introduce phase errors due to the so called phase slips. When a phase slip is committed at the demodulator 135, the signal constellation, i.e. the constellation made of the demodulated symbols Zd(k), is phase-rotated by an unknown multiple of an angle by which the constellation diagram is rotationally symmetric. For square QAM schemes such as 64QAM schemes, this angle could be equal to $\pi/2$. In the following, for sake of simplicity, reference will be made to square QAM schemes, when not otherwise specified. It follows from the above that, in these cases, the signal constellation of the demodulated symbols Zd(k) may exhibit an arbitrary orientation of the quadrature axes (referred to also as quadrature orientation or polarity) which leads to an ambiguous determination of the quadrant to which the symbol belongs.

The inventors noticed that in presence of such ambiguity related to the polarity of the signal constellation it is not possible to estimate and compensate the transmitter quadrature imbalances in a reliable manner.

The transmitter imbalance compensation block 136 is configured to compensate the transmitter quadrature imbalances, as it will be described in greater detail herein after.

The de-mapper 137 is preferably configured to perform symbol decision, i.e. to de-map the incoming symbols into a binary sequence (for hard-decision FEC decoding, or HD-FEC) or into information indicating the reliability of the outcome of symbol decision (for soft-decision FEC decoding, or SD-FEC). This information may take the form of a set of log-likelihood ratios (LLRs) associated with the sequence of bits.

The decoder 138 is preferably configured to implement a forward error correction (FEC) technique. The decoder 138, in particular, may implement a hard-decision FEC decoding or a soft-decision FEC decoding.

In the following, different embodiments of the present invention will be described in more detail.

According to a first embodiment of the present invention, the transmitter imbalance compensation block 136 is arranged within the digital processing unit 133 after the phase estimation block 135b of the demodulator 135. It may be arranged before the de-mapper 137, as represented in Figure 2. The transmitter imbalance compensation block 136 preferably receives the sequence of demodulated symbols Zd(k) output by the demodulator 135 and processes them to generate an output sequence of compensated symbols Zdc(k) (namely, symbols on which the transmitter quadrature imbalances are compensated) as it will be described in the following.

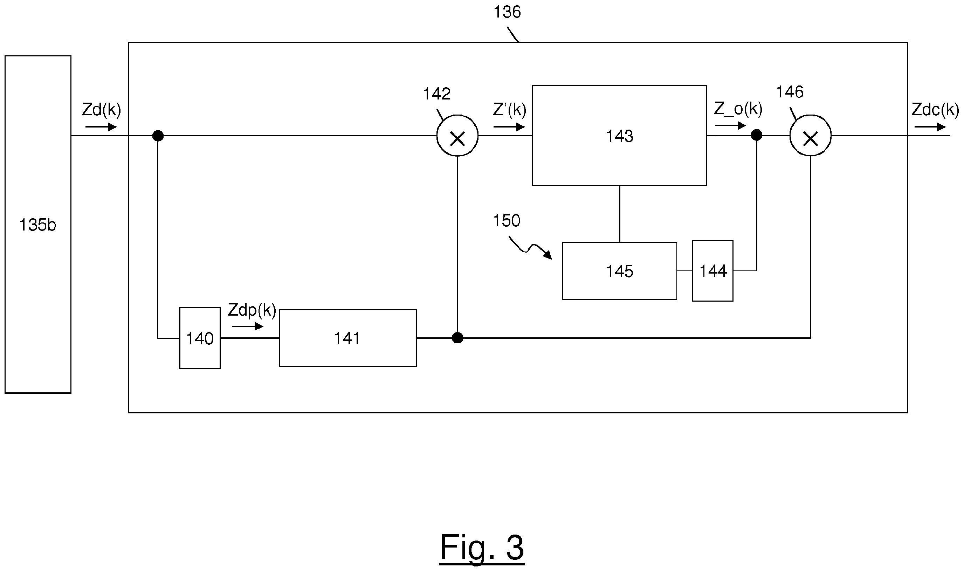

Figure 3 shows the transmitter imbalance compensation block 136 according to this first embodiment of the present invention. The transmitter imbalance compensation block 136 preferably comprises a first sampler 140, an absolute phase estimation circuit 141, a phase correcting module 142, a quadrature imbalance compensation circuit 143, a second sampler 144, a quadrature imbalance detection circuit 145 and a phase restoring module 146. These components are arranged as shown in Figure 3. In particular, the output of the phase correcting module 142 is connected to an input of the quadrature imbalance compensation circuit 143, while the second sampler 144 and the quadrature imbalance detection circuit 145 form a feedback loop 150 connecting the output of the quadrature imbalance compensation circuit 143 to further inputs of the same quadrature imbalance compensation circuit 143, as it will be clearer herein after.

At the transmitter imbalance compensation block 136, the demodulated symbols Zd(k) are sampled by the first sampler 140. Preferably, the first sampler 140 is configured to sample the demodulated symbol sequence Zd(k) at a sampling rate equal to about the pilot symbol rate fp. Therefore, the first sampler 140 preferably samples the demodulated pilot symbols from the demodulated symbol sequence. The demodulated pilot symbols are indicated in Figure 3 by the reference Zdp(k). In other words, Zdp(k) is the (pilot) symbol that is sampled from the sequence of demodulated symbols Zd(k) in correspondence of a k-th sampling interval which is an integer multiple of the pilot symbol period 1/fp.

Then, the demodulated pilot symbols Zdp(k) are fed to the absolute phase estimation circuit 141. Preferably, the absolute phase estimation circuit 141 is configured to estimate at least one phase error φ(k) as a phase difference between the phase of a demodulated pilot symbol Zdp(k) and the phase of the corresponding reference pilot symbol, which is known at the receiver 100. For simplicity, the reference pilot symbol corresponding to the demodulated pilot symbol Zdp(k) will be indicated as P(k). It is to be noticed that the phase of a reference pilot symbol P(k) is indicative of a receiver absolute phase reference. As mentioned above, this phase error φ(k) may be due to a phase slip occurring at the demodulator 135. For a square QAM scheme, the phase error φ(k) comprises a multiple of the quadrature angle, i.e. $\varphi(k)=m\cdot\pi/2$, m=1, 2, 3, 4.

In particular, the absolute phase estimation circuit 141 is preferably configured to estimate a sequence of phase errors φ(k) based on the phase differences between the phases of the sequence of demodulated pilot symbols Zdp(k) and the phases of the sequence of reference pilot symbols P(k). In order to do this, the absolute phase estimation circuit 141 preferably comprises a known maximum likelihood sequence estimator (MLSE) based on the Viterbi algorithm. Alternatively, the absolute phase estimation circuit 141 preferably comprises a known maximum a posteriori probability (MAP) detector. These algorithms are known and hence will not be described in greater detail herein after.

The absolute phase estimation circuit 141 then preferably provides at its output a hard decision on the phase error φ(k) in correspondence of the demodulated pilot symbol Zdp(k). In particular, the absolute phase estimation circuit 141 preferably decides by which multiple of the quadrature angle the phase of the demodulated pilot symbol Zdp(k) is rotated. This phase error φ(k) is preferably associated with an information block comprising a number of demodulated information symbols. In other words, the demodulated information symbols of an information block are assumed to be affected by the same estimated phase error φ(k). In particular, assuming that a number N of demodulated information symbols are comprised between two successive demodulated pilot symbols, where N is an integer number equal to or higher than 1 and indicates the pilot symbol periodicity, the phase error φ(k) computed on the basis of the current demodulated pilot symbol Zdp(k) is preferably associated with an information block comprising the N demodulated information symbols between the current demodulated pilot symbol Zdp(k) and the next demodulated pilot symbol Zdp(k+N). Alternatively, the information block associated with the estimated phase error φ(k) may comprise a first number N1 of demodulated information symbols preceding the current demodulated pilot symbol Zdp(k), and a second number N2 of demodulated information symbols following the current demodulated pilot symbol Zdp(k). The pilot symbol periodicity N may be even or odd and N=N1+N2. For instance, N1=N2=N/2. The information block comprises the demodulated information symbols Zd(k-1), Zd(k-2), ..., Zd(k-N1), and the demodulated information symbols Zd(k+1), Zd(k+2), ..., Zd(k+N2).

Each time a phase error φ(k) is estimated in correspondence of a given demodulated pilot symbol Zdp(k), the phase correcting module 142 preferably removes the phase error φ(k) from the demodulated pilot symbol and the demodulated information symbols of the corresponding information block. In particular, the phase correcting module 142 preferably comprises a complex multiplier that multiplies the incoming symbols, namely the demodulated pilot symbol Zdp(k) and the demodulated information symbols of the corresponding information block, by the complex number $e^{-j\varphi(k)}$. This means that the demodulated pilot symbol Zdp(k) and the demodulated information symbols of the corresponding information block, at the output of the first complex multiplier 142, are "flipped" or rotated by the estimated phase error φ(k) so that their phases are aligned with the receiver phase reference. These "flipped symbols" are indicated in Figure 3 with the reference Z'(k). In this way, the signal constellation is "at phase rest" and is kept aligned with the receiver phase reference so that the polarity ambiguity due to phase slips is advantageously resolved.

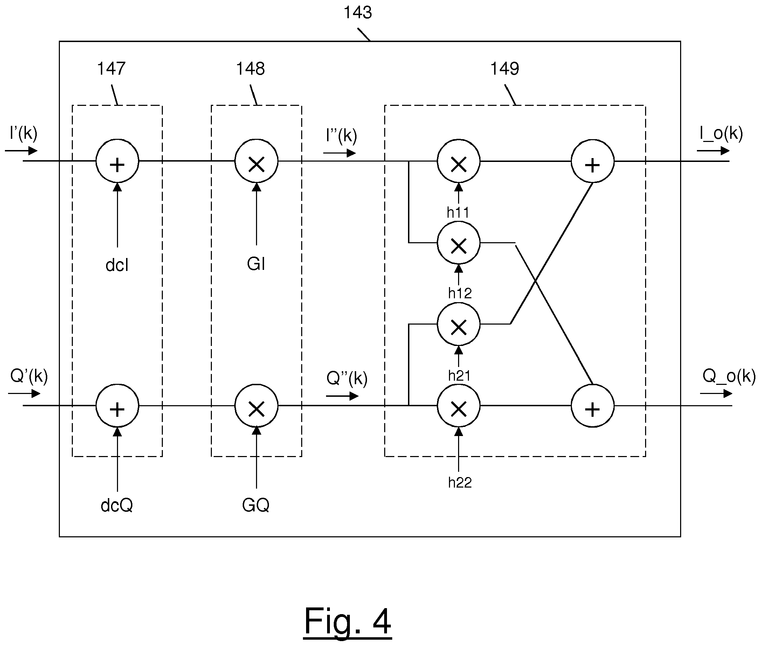

Then, the flipped symbols Z'(k) are preferably fed to the quadrature imbalance compensation circuit 143, which is schematically illustrated in Figure 4.

The quadrature imbalance compensation circuit 143 preferably comprises an offset compensation module 147, a gain compensation module 148 and a phase skew compensation module 149, connected in cascade.

The offset compensation module 147 and the gain compensation module 148 are preferably configured to correct the quadrature amplitude imbalances introduced at the transmitter, i.e., respectively, quadrature dc-offset imbalances due to unequal dc-offsets and quadrature gain imbalances due to unequal gains, over the I-, Q-components of the incoming symbols.

The offset compensation module 147 preferably comprises a first real-valued adder and a second real-valued adder. For each flipped symbol Z'(k), the first real-valued adder preferably receives the I-component I'(k) of the flipped symbol Z'(k) and adds to this component an in-phase offset coefficient dcI. Analogously, the second real-valued adder preferably receives the Q-component Q'(k) of the flipped symbol Z'(k) and adds to this component a quadrature offset coefficient dcQ. The in-phase offset coefficient dcI and the quadrature offset coefficient dcQ are preferably configured for the first time during an initialization phase for the receiver 100 (for instance, they may be set to target values or to zero), and they are updated during operation of the receiver 100 through the feedback loop 150, as it will be described herein after. In particular, during operation, the in-phase offset coefficient dcI and the quadrature offset coefficient dcQ are preferably provided to the quadrature imbalance compensation circuit 143, in particular to the offset compensation module 147, by the quadrature imbalance detection circuit 145, as it will be described herein after.

The gain compensation module 148 preferably comprises a first real-valued multiplier and a second real-valued multiplier. For each flipped symbol Z'(k), the first real-valued multiplier preferably receives the sum of the 1-component I'(k) of the flipped symbol Z'(k) and the in-phase offset coefficient dcI (i.e., the output of the first real-valued adder of the offset compensation module 147) and multiplies it by an in-phase gain coefficient GI. Analogously, the second real-valued multiplier preferably receives the sum of the Q-component Q'(k) of the flipped symbol Z'(k) and the quadrature offset coefficient dcQ (i.e., the output of the second real-valued adder of the offset compensation module 147) and multiplies by a quadrature gain coefficient GQ. The in-phase gain coefficient GI and the quadrature gain coefficient GQ are preferably configured during the initialization phase for the receiver 100 (for instance, they may be set to target values or to one), and they are updated during operation of the receiver 100 through the feedback loop 150, as it will be described herein after. In particular, during operation, the in-phase gain coefficient GI and the quadrature gain coefficient GQ are preferably provided to the quadrature imbalance compensation circuit 143, in particular to the gain compensation module 148, by the quadrature imbalance detection circuit 145, as it will be described herein after.

At the output of the gain compensation module 148 the following I-, Q- components are obtained:

$$I''(k)=GI\cdot(I'(k)+dcI) \qquad [1]$$

$$Q''(k)=GQ\cdot(Q'(k)+dcQ). \qquad [2]$$

In the I-, Q- components I''(k), Q''(k) at the output of the gain compensation circuit 148, the transmitter quadrature amplitude imbalances (quadrature dc-offset and quadrature gain) are advantageously corrected.

The phase skew compensation module 149 is preferably configured to correct the quadrature phase imbalance introduced at the transmitter. It preferably comprises four real-valued multipliers, which are configured to multiply the I-, Q- components I''(k), Q''(k) at the output of the gain compensation module 148 by four coefficients h11, h12, h21, h22, and two adders configured to compute output I-, Q- components I_o(k), Q_o(k) according to the following equations:

$$I\_o(k)=h11\cdot I''(k)+h21\cdot Q''(k) \qquad [3]$$

$$Q\_o(k)=h12\cdot I''(k)+h22\cdot Q''(k). \qquad [4]$$

The coefficients h11, h12, h21, h22 are preferably configured during the initialization phase for the receiver 100 (for instance, they may be set to target values or to zero), and they are updated during operation of the receiver 100 through the feedback loop 150, as it will be described herein after. In particular, during operation, the coefficients h11, h12, h21, h22 are preferably provided to the quadrature imbalance compensation circuit 143, in particular to the phase skew compensation module 149, by the quadrature imbalance detection circuit 145, as it will be described herein after.

In the I-, Q- components I_o(k), Q_o(k) at the output of the phase skew compensation circuit 149 the transmitter quadrature phase imbalance is advantageously corrected.

With reference again to Figure 3, the symbols Z_o(k) output by the quadrature imbalance compensation circuit 143 having I-, Q-components I_o(k), Q_o(k) are fed to the feedback loop 150, in particular to the second sampler 144. The second sampler 144 is preferably configured to sample the pilot symbols from the sequence of symbols Z_o(k).

Then, the quadrature imbalance detection circuit 145 preferably estimates the quadrature imbalances on these pilot symbols. On the basis of the quadrature imbalance estimates, the quadrature imbalance detection circuit 145 preferably updates the coefficients used in the quadrature imbalance compensation circuit 143, namely, the in-phase offset coefficient dcI and the quadrature offset coefficient dcQ used in the offset compensation module 147, the in-phase gain coefficient GI and the quadrature gain coefficient GQ used in the gain compensation module 148, and the four coefficients used in the phase skew compensating circuit h11, h12, h21, h22. Alternatively, the quadrature imbalances may be estimated on all the symbols Z_o(k) output by the quadrature imbalance compensation circuit 143. In this case, the second sampler 144 is unnecessary.

In particular, the quadrature imbalance compensation circuit 143, the second sampler 144 and the quadrature imbalance detection circuit 145 preferably implement an adaptive equalizer, in particular a decision feedback adaptive equalizer. The principle of operation of an adaptive equalizer is known and hence it will not be described in detail in the following. According to embodiments of the present invention, the quadrature imbalance detection circuit 145 averages the estimated dc-offsets, amplitude errors and phase errors over a number of subsequent pilot symbols in order to recover, at a rate substantially equal to the pilot symbol rate fp or lower, an average dc-offset, an average amplitude error and an average phase error. Then, the quadrature imbalance detection circuit 145 preferably updates the values of the in-phase offset coefficient dcI, the quadrature offset coefficient dcQ, the in-phase gain coefficient GI, the quadrature gain coefficient GQ and the four coefficients used in the phase skew compensating circuit h11, h12, h21, h22 on the basis of the computed average dc-offset, average amplitude error and average phase error so as to compensate them. Updating of the in-phase offset coefficient dcI, the quadrature offset coefficient dcQ, the in-phase gain coefficient GI, the quadrature gain coefficient GQ and the four coefficients used in the phase skew compensating circuit h11, h12, h21, h22 may be performed at a rate substantially equal to the pilot symbol rate fp or at a lower rate.

In the meanwhile, the symbols Z_o(k) output by the quadrature imbalance compensation circuit 143 are fed to the phase restoring module 146. The phase restoring module 146 preferably performs an inverse operation with respect to the phase correcting module 142. It preferably comprises a complex multiplier that multiplies the symbols Z_o(k) by the complex number $e^{j\varphi(k)}$ and provides, at its output, the compensated symbols Zdc(k). In this way, the phase of each compensated symbols Zdc(k) at the output of the transmitter imbalance compensation block 138 is restored to the value that the symbol phase had at the input of the transmitter imbalance compensation block 138. Therefore, advantageously, the transmitter imbalance compensation block 138 is "phase-preserving" and it may be used also before demodulation, as it will be described herein after with reference to other embodiments of the present invention.

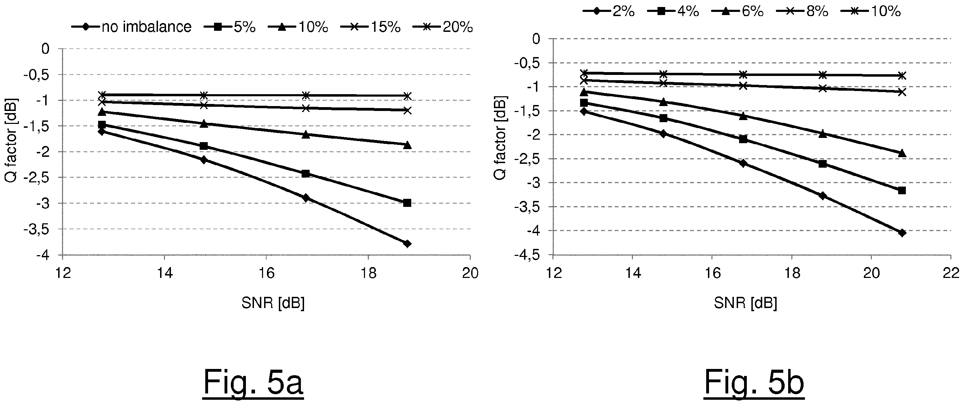

Figures 5a and 5b show graphs reporting the Q factor, expressed in dB, computed by the inventors, against the signal-to-noise ratio (SNR), expressed in dB, for different amounts of, respectively, gain and dc-offset imbalances, in the absence of the transmitter imbalance compensation block 136 described above.

As known, the Q factor may be computed as:

$$Q\ factor = 20\log_{10}(\sqrt{2} \cdot \text{erfcinv}(2 \cdot BER))$$

where BER is the bit error rate and erfcinv indicates the inverse complementary error function.

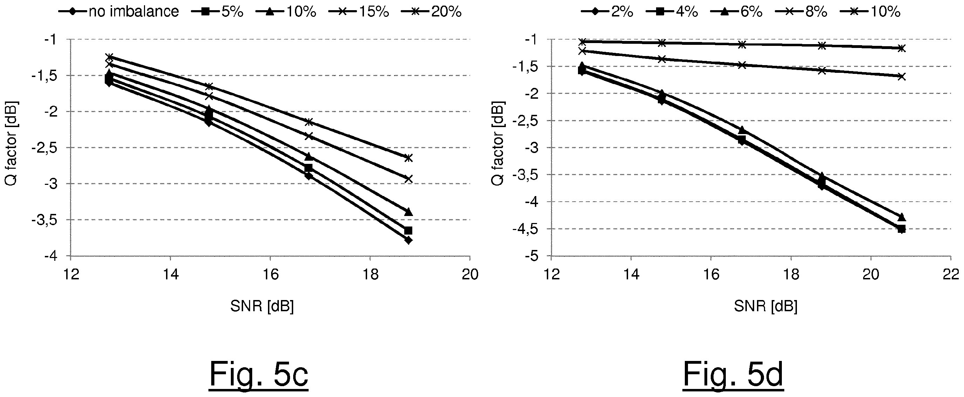

Figures 5c and 5d show graphs reporting the Q factor against the SNR for different amounts of, respectively, gain and dc-offset imbalances, after the transmitter quadrature imbalance compensation performed by the transmitter imbalance compensation block 136 described above. All the graphs are related to an exemplary square PM-64QAM scheme. The considered amounts of gain and dc-offset imbalances are expressed as percentages with respect to a constellation dimension D, which is indicative of a maximum absolute value that either the I-coordinate or the Q-coordinate of a constellation point may take. In case, for instance, of a square 64QAM constellation, the maximum value of the I-coordinate and the maximum value of the Q-coordinate are equal and hence D is equal to about such maximum value. In particular, Figures 5a and 5c report the computed Q factor against the SNR considering, respectively, a gain imbalance equal to about 5%, 10%, 15%, 20% of D, and considering no gain imbalance. Figures 5b and 5d report the computed Q factor as a function of the SNR considering, respectively, a dc-offset equal to about 2%, 4%, 6%, 8% and 10% of D.

As can be seen from Figures 5a and 5b, the transmitter quadrature amplitude imbalances cause severe SNR penalties and also error floors. As can be noticed from comparison of the graphs in Figures 5a and 5c, the SNR penalties associated with gain imbalances are significantly reduced by the transmitter imbalance compensation performed according to the first embodiment of the present invention. As can be noticed from comparison of the graphs in Figures 5b and 5d, also the performances in presence of quadrature dc-offsets are improved. However, for moderate quadrature dc-offsets (e.g. higher than 8%), the Q factor still presents error floors.

In the light of the above, the inventors perceived that the transmitter imbalance compensation block according to the first embodiment of the present invention allows compensating the transmitter quadrature imbalances in situations where quadrature dc-offsets are not expected to be significant or for low order QAM schemes.

In the following description and in corresponding Figures, further embodiments of the digital processing unit 133 will be described. The different embodiments will be distinguished using reference numerals differing in the first digit. In particular, same or similar components belonging to different embodiments will be indicated by the same reference numeral with a different value of the first digit.

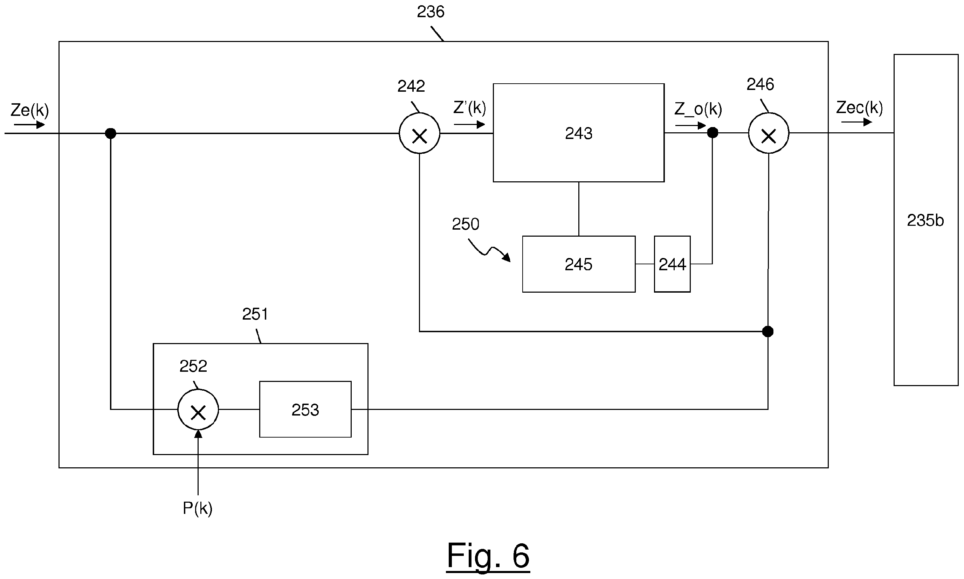

Figure 6 schematically shows a transmitter imbalance compensation block 236 according to a second embodiment of the present invention. As can be seen from Figure 6, the transmitter imbalance compensation block 236 according to this second embodiment is configured to process received symbols before phase estimation performed at the demodulator. Therefore, the transmitter imbalance compensation block 236 according to the second embodiment of the present invention may receive, at its input, the symbols processed by the channel equalizer 134 and by the frequency estimation block 135a of Figure 2. The received symbols at the input of the transmitter imbalance compensation block 236 are indicated in Figure 6 by the reference Ze(k). It is to be noticed that at this stage of demodulation (after frequency error estimation and correction) the signal constellation is slowly rotating due to residual phase noise.

The transmitter imbalance compensation block 236 preferably comprises an absolute phase estimating circuit 251, a phase correcting module 242, a quadrature imbalance compensation circuit 243, a sampler 244, a quadrature imbalance detection circuit 245 and a phase restoring module 246. These components are arranged as shown in Figure 6. In particular, the output of the phase correcting module 242 is connected to an input of the quadrature imbalance compensation circuit 243, while the sampler 244 and the quadrature imbalance detection circuit 245 form a feedback loop 250 connecting the output of the quadrature imbalance compensation circuit 243 to further inputs of the same quadrature imbalance compensation circuit 243, as already described above with reference to the first embodiment. Indeed, the operation of the phase correcting module 242, the quadrature imbalance compensation circuit 243, the sampler 244, the quadrature imbalance detection circuit 245 and the phase restoring module 246 is the same as already described above with reference to the first embodiment. Hence, a detailed description of the structure and operation of these components will be omitted. In the following, the structure and operation of the phase estimating circuit 251 according to this second embodiment will be described.

Since in this second embodiment the compensation of the transmitter quadrature imbalances is performed before phase estimation, no phase slips are expected to affect the polarity of the signal constellation at the input of the transmitter imbalance compensation block 236. As mentioned above, the signal constellation at the input of the transmitter imbalance compensation block 236 is however expected to rotate due to lasers' phase noise (both transmitter laser phase noise and receiver laser phase noise) and channel's phase noise.

The absolute phase estimating circuit 251 according to this second embodiment is preferably configured to perform a "coarse" phase estimation as it will be described in the following. The phase estimating circuit 251 preferably comprises a complex multiplier 252 and a filter 253. The filter 253 is preferably a moving average interpolation filter. The complex multiplier 252 is preferably configured to multiply the incoming symbols Ze(k) with the complex conjugate of a zero-padded sequence of reference pilot symbols P(k) which is known at the receiver 100 (i.e. the sequence comprises zeros in time intervals corresponding to non-pilot symbol transmission).

Given that the pilot symbol periodicity is N, each pilot symbol occurs at a discrete time instant $i \cdot N$, where i is an integer number equal to or higher than 0. Hence, the zero-padded sequence of reference symbols may be expressed as:

$$P(k)=X(k) \qquad \text{for } k=i \cdot N$$

$$P(k)=0 \qquad \text{for } k \neq i \cdot N$$

where X(k) is the symbol sequence at the transmitter side.

The resulting sequence of samples is then preferably filtered by the moving average interpolation filter 253. The phase estimation is performed by taking the argument of the samples at the output of the interpolation filter 253.

In particular, the third multiplier 252 preferably computes the following sequence:

$$Y(k)=\exp\{j \cdot \arg(Ze(k) \cdot P^*(k))\} \qquad \text{for } k \cdot \mathrm{mod}(N)=0 \qquad [5]$$

$$Y(k)=0 \qquad \text{for } k \cdot \mathrm{mod}(N) \neq 0 \qquad [6]$$

where $P^*(k)$ denotes the complex conjugate of the zero-padded sequence of reference pilot symbols, N is the periodicity of pilot symbols and the expression $k \cdot \mathrm{mod}(N)$ indicates, as known, the modulo operation between k and N. The expression $\arg(Ze(k) \cdot P^*(k))$ indicates the argument of the complex number $Ze(k) \cdot P^*(k)$. As evident from equation [5], the argument of the complex number Ze(k)·P*(k) is preferably computed for k·mod(N)=0, namely only for pilot symbols from the incoming sequence Ze(k), and it is the difference between the phase of an incoming pilot symbol and the phase of the corresponding reference pilot symbol P(k).

Then, the filter 253 preferably computes a filtered sequence as follows:

$$W(k) = \sum_{n=-NF}^{NF} Y(k-n) \qquad [7]$$

where NF is an integer number equal to or higher than 1. NF is the filter length and preferably ranges between 1 and 100. This filtering operation advantageously allows improving the estimation of the phase error in the presence of noise.

The absolute phase estimating circuit 251 then preferably estimates the phase error $\varphi(k)$ by taking the argument of the samples at the output of the interpolation filter as:

$$\varphi(k)=\arg(W(k)). \qquad [8]$$

This estimated phase error is removed from the received information symbols of the information block associated with the considered pilot symbol at the phase correcting module 242.

Alternatively, the phase error to be removed from each received information symbol of an information block between two successive pilot symbols may be computed by sampling a phase error interpolating function which may be obtained from the phase errors estimated according to equations [5]-[8] for the two pilot symbols.

Then, after the compensation performed by the quadrature imbalance compensation circuit 243, the signal phase is restored back to its initial value at the phase restoring module 246 and compensated symbols Zec(k) are output by the transmitter imbalance compensation block 236.

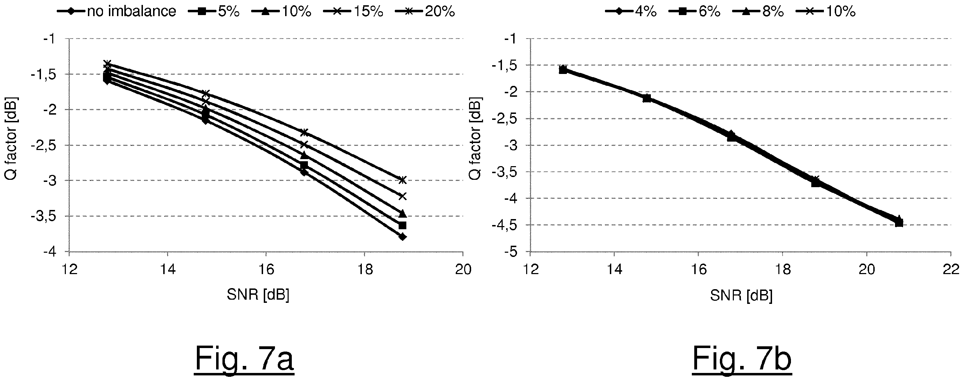

Figures 7a and 7b show graphs reporting the Q factor against the SNR for different amounts of, respectively, gain and dc-offset imbalances, after the transmitter quadrature imbalance compensation performed by the transmitter imbalance compensation block 236 according to the second embodiment of the present invention. The graphs are related to the same exemplary 64QAM scheme mentioned above with reference to Figure 5a-5d. Figure 7a reports the computed Q factor against the SNR considering, respectively, a gain imbalance equal to about 5%, 10%, 15%, 20% of D, and considering no gain imbalance. Figure 7b reports the computed Q factor against the SNR considering, respectively, a dc-offset equal to about 4%, 6%, 8% and 10% of D.

It is to be noticed that the transmitter imbalance compensation block 236 according to the second embodiment of the present invention allows to overcome the SNR penalties associated with gain imbalances and also quadrature dc-offsets. In this case, the Q factor curves do not show error floors. Therefore, the inventors perceived that this embodiment allows compensating the transmitter quadrature imbalances for those scenarios where quadrature dc-offsets are expected to be significant or for high order QAM schemes.

This second embodiment allows to overcome the penalties associated with gain and quadrature dc off-set imbalances that may cause the demodulator to fail, even catastrophically. Failure is due to the fact that carrier recovery is based on symbol decision, and a correct decision may be strongly compromised by the gain and quadrature dc off-set imbalances. Compensation of the transmitter quadrature imbalances before demodulation allows preventing such failure.

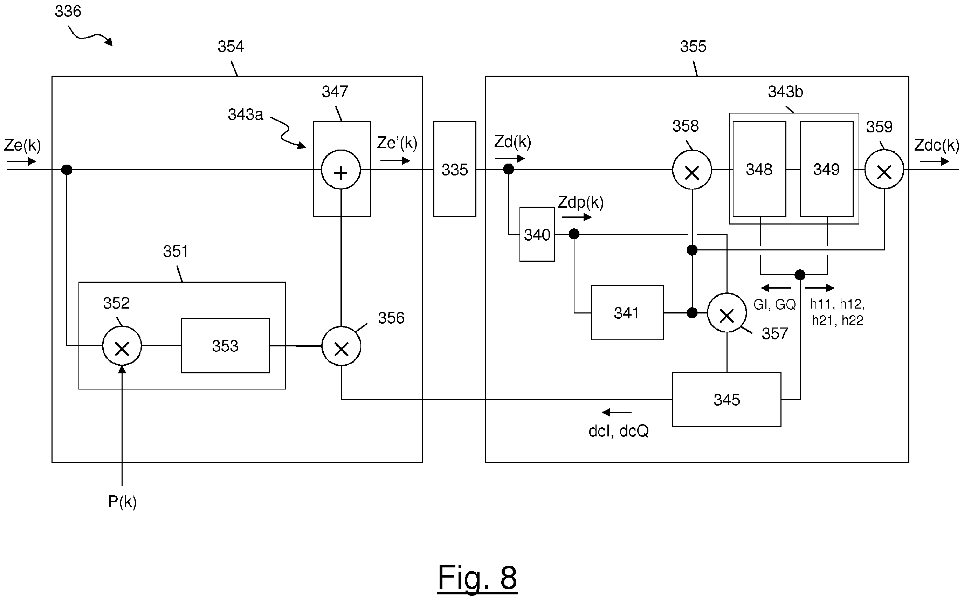

Figure 8 schematically shows a transmitter imbalance compensation block 336 according to a third embodiment of the present invention. In this case, the transmitter imbalance compensation block 336 preferably comprises a first portion 354 configured to be arranged before the demodulator 335 and a second portion 355 configured to be arranged after the demodulator 335. The first portion 354 of the transmitter imbalance compensation block 336 preferably comprises a first portion 343a of a quadrature imbalance compensation circuit that preferably performs the quadrature dc-offset correction before demodulation while a second portion 355 of the transmitter imbalance compensation block 336 preferably comprises a second portion 343b of the quadrature imbalance compensation circuit that preferably performs the quadrature gain and phase skew imbalance correction after demodulation. Indeed, as noticed above with reference to Figure 7b, if the quadrature dc-offset correction is performed before demodulation as in the second embodiment, the Q factor for the considered exemplary 64QAM scheme does not show error floors and the performances are improved with respect to performing the quadrature dc-offset correction after demodulation as in the first embodiment. However, as far as gain and phase imbalances are considered, they may be profitably corrected even after demodulation, as in the first embodiment.

The first portion 354 preferably comprises a first absolute phase estimating circuit 351, a first phase correcting module 356 and a dc-offset compensation module 347. The second portion 355 preferably comprises a sampler 340, a second absolute phase estimating circuit 341, a second phase correcting module 357, a third phase correcting module 358, a quadrature imbalance detection circuit 345, a gain compensation module 348, a phase skew compensation module 349 and a phase restoring module 359.

The first absolute phase estimating circuit 351 is similar to the absolute phase estimating circuit 251 of the transmitter imbalance compensation block 236 according to the second embodiment of the present invention and hence its operation will not be described here. The first absolute phase estimating circuit 351 preferably estimates a first phase error $\varphi1(k)$ according to equations [5]-[8] above. Then, the first phase correcting module 356 preferably combines the outcome of the first absolute phase estimating circuit 351 with the dc-offset quadrature coefficients dcI and dcQ provided as a feedback by the quadrature imbalance detection circuit 345. In particular, the first phase correcting module 356 preferably comprises a complex multiplier that combines the dc-offset quadrature coefficients dcI and dcQ by computing a complex sum (dcI+j·dcQ) and multiplies the computed sum (dcI+j·dcQ) by exp(-j$\varphi$1(k)). Then, the output of the first phase correcting module 356 is fed to the dc-offset compensation module 347 which preferably computes dc-offset compensated symbols Ze'(k) according to the following equation:

$$Ze'(k)=Ze(k)-(dcI+j\cdot dcQ)\cdot exp(-j\varphi1(k)). \qquad [9]$$

The dc-offset compensated symbols Ze'(k) are preferably forwarded to the demodulator 335, which preferably processes them in order to obtain demodulated samples Zd(k). Processing at the demodulator 335 preferably comprises carrier recovery as already described above. The demodulated samples Zd(k) are then fed to the second portion 355. Within the second portion 355, the demodulated symbols Zd(k) are preferably sampled by the sampler 340 at a sampling rate equal to about the pilot symbol rate. Hence, the sampler 340 extracts the demodulated pilot symbols Zdp(k) from the sequence of demodulated symbols Zd(k) and forwards them to the second absolute phase estimating circuit 341. The operation of the second absolute phase estimating circuit 341 is preferably the same as the operation of the absolute phase estimating circuit 141 according to the first embodiment of the present invention. Hence, the second absolute phase estimating circuit 341 preferably outputs a second phase error $\varphi2(k)$ (which comprises a multiple of the quadrature angle) for each pilot symbol Zdp(k), and the second phase error $\varphi2(k)$ is then used by the second phase correcting module 357 for "flipping" the demodulated pilot symbols Zdp(k) as already described above with reference to the phase correcting modules 142 and 242 according to the first and second embodiments of the present invention. The flipped pilot symbols are in turn used by the quadrature imbalance detection circuit 345 for estimating and updating the in-phase offset coefficient dcI, the quadrature offset coefficient dcQ, the in-phase gain coefficient GI, the quadrature gain coefficient GQ and the four coefficients h11, h12, h21, h22 used in the phase skew compensating circuit 349, as already described above. Moreover, the second phase error $\varphi2(k)$ is then used by the third phase correcting module 358 for removing the second phase error $\varphi2(k)$ from the demodulated information symbols Zd(k) of the information block associated with the considered demodulated pilot symbol Zpd(k). In particular, the third phase correcting module 358 preferably comprises a complex multiplier that multiplies the demodulated pilot symbol Zdp(k) and the demodulated information symbols of the corresponding information block by the complex number $e^{-j\varphi(k)}$.

The symbols at the output of the phase skew compensating circuit 349 are fed to the phase restoring module 359, which preferably performs an inverse operation with respect to the third phase correcting module 358. It preferably comprises a complex multiplier that multiplies the symbols by the complex number $e^{j\varphi2(k)}$ and provides, at its output, the compensated symbols Zdc(k). In this way, as already described above, the phase of each compensated symbols Zdc(k) at the output of the transmitter imbalance compensation block 336 is restored to the value that the symbol phase had at the input of the transmitter imbalance compensation block 336.

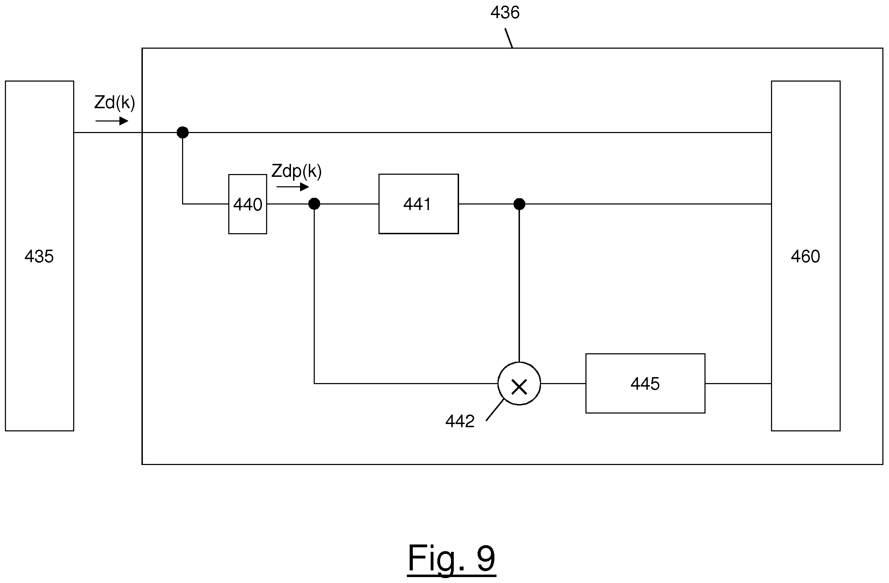

Figure 9 shows a transmitter imbalance compensation block 436 according to a fourth embodiment of the present invention. According to this embodiment, the transmitter imbalance compensation block 436 is connected at the output of the demodulator 435. The transmitter imbalance compensation block 438 preferably comprises a sampler 440, an absolute phase estimating circuit 441, a phase correcting module 442, a quadrature imbalance detection circuit 445 and a quadrature imbalance compensation circuit 460. The quadrature imbalance compensation circuit 460 according to this fourth embodiment is preferably configured to compute metric information (e.g. log-likelihood ratios or LLRs) for the implementation of a soft-decision FEC decoding.

The demodulated samples Zd(k) at the output of the demodulator 435 are preferably sampled by the sampler 440 at a sampling rate equal to about the pilot symbol rate fp. Hence, the sampler 440 extracts the demodulated pilot symbols Zdp(k) from the sequence of demodulated symbols Zd(k) and forwards them to the absolute phase estimating circuit 441. The operation of the absolute phase estimating circuit 441 is preferably the same as the operation of the absolute phase estimating circuit 141 according to the first embodiment of the present invention. Hence, the absolute phase estimating circuit 441 preferably outputs a phase error $\varphi(k)$ (which comprises a multiple of the quadrature angle) for each pilot symbol Zdp(k). The phase error $\varphi(k)$ is then used by the phase correcting module 442 for "flipping" the demodulated pilot symbols Zdp(k) as already described above. The flipped pilot symbols are then used by the quadrature imbalance detection circuit 445 for estimating the imbalance coefficients, namely the in-phase offset coefficient dcI, the quadrature offset coefficient dcQ, the in-phase gain coefficient GI, the quadrature gain coefficient GQ and the four coefficients h11, h12, h21, h22, as already described above.

According to this fourth embodiment, the absolute phase estimating circuit 441 further provides at its output a soft-decision reliability information for each demodulated pilot symbol Zdp(k), namely it provides at its output an information indicating the reliability of the decision taken by the absolute phase estimating circuit 441 about the phase error φ(k). This information is preferably in the form of a set of probabilities associated with the values that the phase error φ(k) may take, or, in other words, a set of probabilities associated with the quadrants of the complex plane to which the Zdp(k) may belong.

According to this fourth embodiment, no quadrature imbalance correction is performed on the demodulated symbols Zd(k), but the soft-decision reliability information obtained by the absolute phase estimating circuit 441 is preferably combined, at the quadrature imbalance compensation circuit 460, with the estimated imbalance coefficients provided by the quadrature imbalance detection circuit 445 and included in the computation of the metric information, e.g. the LLRs, of the information symbols which are then used for soft-decision FEC decoding. In this way, the computation of the metric information takes into account the transmitter quadrature imbalances, which then result compensated.

An example of calculation performed by the quadrature imbalance compensation circuit 460 is given in the following. The calculation refers to a Binary Phase Shift Keying (BPSK) modulation scheme according to which two phase values (0, π) are used for conveying the bits 0, 1 over the carrier signal. It is assumed for simplicity that only the dc-offset imbalance affects the received signal. In this case, the quadrature imbalance detection circuit 445 is configured to provide an estimate of an offset coefficient.

The log-likelihood ratio (LLR) computed by the quadrature imbalance compensation circuit 458 may have the following expression:

$$LLR = \ln \frac{\exp\left[-\dfrac{(Zd(k)-(a+dc))^2}{2\sigma^2}\right] \cdot \dfrac{\rho_0}{\rho_1} + \exp\left[-\dfrac{(Zd(k)+(a+dc))^2}{2\sigma^2}\right]}{\exp\left[-\dfrac{(Zd(k)+(a-dc))^2}{2\sigma^2}\right] \cdot \dfrac{\rho_0}{\rho_1} + \exp\left[-\dfrac{(Zd(k)-(a-dc))^2}{2\sigma^2}\right]} \quad [10]$$

where Zd(k) is a BPSK demodulated information symbol, a=0.5, dc is the estimated offset coefficient, and $\rho_0$, $\rho_1$ are the probabilities that the phase of the symbol is 0 or π (i.e. the probabilities that the received bit is 0 or 1), respectively, provided by the phase estimating circuit 441.

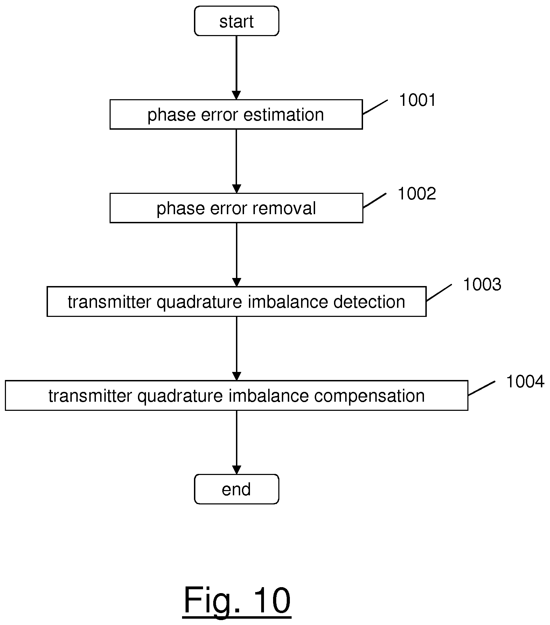

Figure 10 shows a flowchart of the method for compensating the transmitter quadrature imbalances which may be performed by a transmitter imbalance compensation block comprised in a digital processing unit according to the embodiments of the present invention.

The method preferably comprises, at step 1001, determining an estimate of a phase error of the received symbols with respect to an absolute phase reference of the receiver 100. The estimate is preferably determined on the basis of received pilot symbols and by comparing the received pilot symbols with the expected values thereof, namely a sequence of reference pilot symbols, which, as mentioned above, are known at the receiver 100. The phase error may be due to phase slips and/or to the phase noise due to the local laser 112, the transmission channel and the transmitter laser and causes the signal constellation to rotate with respect to the absolute phase reference at the receiver. In other words, a phase slip and/or a laser phase noise and/or a channel phase noise may cause the quadrature axes of the signal constellation to rotate with respect to the reference quadrature axes at the receiver.

Further, the phase error estimated at step 1001 is preferably removed from the received information symbols (step 1002). In this way, at the end of step 1002, the signal constellation is at phase-rest and the quadrature axes of the signal constellation are aligned with the reference quadrature axes at the receiver 100. At step 1003, the transmitter quadrature imbalances are preferably detected. They may be estimated either on pilot symbols only or on all symbols, i.e. pilot symbols and information symbols, after phase error removal. Detection of the transmitter quadrature imbalances preferably comprises determining or updating a number of coefficients to be used for compensating the transmitter quadrature imbalances. The coefficients are preferably the in-phase offset coefficient dcI, the quadrature offset coefficient dcQ, the in-phase gain coefficient GI, the quadrature gain coefficient GQ and the four coefficients used in the phase skew compensating circuit h11, h12, h21, h22 described above. Step 1004 provides for compensating the transmitter quadrature imbalances on the information symbols. This step may comprise correcting the transmitter quadrature imbalances as in the first, second and third embodiments of the present invention, or, in case soft-decision FEC decoding is implemented at the receiver 100, computing metric information (e.g. LLRs) taking into account the detected transmitter quadrature imbalances. Step 1004 may be performed in parallel with step 1003 as, upon compensation of the transmitter quadrature imbalances, the compensated information symbols may be used for estimating the residual transmitter quadrature imbalances that are in turn used as a feedback for updating the coefficients used for the compensation of the transmitter quadrature imbalances. The method may additionally comprise a step according to which an inverse operation with respect to the operation of step 1002 is performed. In this way, the phase of each symbol after compensation is restored to the value that the symbol phase had before step 1001.

The apparatuses and method according to the present invention advantageously allow to overcome the signal distortions due to the transmitter impairments, which are a severe cause of receiver sensitivity penalty for current transceivers applying QAM formats, in particular high-order QAM formats such as 64QAM. Therefore, the present invention advantageously allows to improve the receiver sensitivity and to improve the transmission reach. In particular, embodiments of the present invention allow to lower the error floors associated with 64QAM demodulation (see Figures 5d and 7b) thus enabling 400 Gb/s transmission on a single optical carrier.

Further, the present invention allows relaxing the specification requirements for the transceiver components and the complexity of the transmitter. Indeed, in the absence of transmitter imbalance compensation provided by the present invention, more thigh specifications for the transmitter components would be required for reducing the transmitter imbalances. Therefore, thanks to the present invention, requirements may be relaxed, thus improving board yields.

The functions of the various elements shown in Figures 1-4, 6, 8, 9, including any functional blocks referred to as "device", "unit", "block", "module", "circuit" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block", "module", "circuit" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included

## Claims

1. An apparatus (136; 236; 336; 436) for compensating transmitter quadrature imbalances over an optical signal (S(t)) received at an optical coherent receiver (100) of a node of an optical communication network, said optical signal (S(t)) comprising a sequence of symbols comprising received information symbols and received pilot symbols, said receiver (100) being configured to store a sequence of reference pilot symbols, the apparatus (136, 236, 336, 436) comprising:

   - an absolute phase estimating circuit (141; 251; 341, 351; 441) configured to estimate a phase error between a received pilot symbol (Zdp(k) and a corresponding pilot symbol of said sequence of reference pilot symbols (P(k));
   - a phase correcting module (142; 242; 358; 442) configured to remove said phase error from said received pilot symbol (Zdp(k)) and a number of received information symbols associated with said received pilot symbol;
   - a quadrature imbalance detection circuit (145; 245; 345; 445) configured to estimate said transmitter quadrature imbalances on the basis of at least said phase-corrected pilot symbol; and
   - a quadrature imbalance compensation circuit (143; 243; 347, 348, 349; 460) configured to compensate said estimated transmission quadrature imbalances over said number of phase-corrected information symbols.

2. The apparatus (136; 336; 436) according to claim 1, wherein said absolute phase estimating circuit (141; 341; 441) comprises a maximum likelihood sequence estimator based on the Viterbi algorithm.

3. The apparatus (136; 336; 436) according to claim 1, wherein said absolute phase estimating circuit (141; 341; 441) comprises a maximum a posteriori probability detector.

4. The apparatus (236; 336) according to claim 1, wherein said absolute phase estimating circuit (251; 351) comprises a complex multiplier (252) and a filter (253), said complex multiplier (252) being configured to multiply incoming symbols (Ze(k)) with a complex conjugate of a zero-padded sequence of reference pilot symbols (P(k)) for computing a difference between the phase of incoming pilot symbols and the phase of the corresponding reference pilot symbols (P(k)), and wherein the filter (253) is a moving average interpolation filter configured to filter a resulting sequence.

5. The apparatus (136; 236; 336; 436) according to claim 1, wherein said phase correcting module (142; 242; 358; 442) comprises a complex multiplier configured to multiply incoming symbols (Zd(k), Ze(k)) by a complex number whose argument is said phase error.

**6.** The apparatus (136; 236; 336; 436) according to claim 1, wherein said quadrature imbalance compensation circuit (143) and said quadrature imbalance detection circuit (145) implement a decision feedback adaptive equalizer wherein said quadrature imbalance detection circuit (145, 245, 345, 445) is configured to update a number of coefficients used in said quadrature imbalance compensation circuit (143).

**7.** The apparatus (136; 236; 336; 436) according to claim 6, wherein said quadrature imbalance compensation circuit (143; 243; 343a, 343b) comprises an offset compensation module (147) configured to correct a transmitter quadrature dc-offset imbalance, a gain compensation module (148) configured to correct a transmitter quadrature gain imbalance, and a phase skew compensation module (149) configured to correct a transmitter quadrature phase imbalance.

**8.** The apparatus (136; 236; 336; 436) according to claim 7, wherein said offset compensation module (147) comprises a first real-valued adder and a second real-valued adder and said number of coefficients comprise an in-phase offset coefficient (dcI) and a quadrature offset coefficient (dcQ), said first real-valued adder being configured to add said in-phase offset coefficient (dcI) to an in-phase component (I'(k)) of an incoming symbol (Z'(k), Ze(k)), and said second real-valued adder being configured to add said quadrature offset coefficient (dcQ) to a quadrature component (Q'(k)) of said incoming symbol (Z'(k), Ze(k)).

**9.** The apparatus (136; 236; 336; 436) according to claim 7, wherein said gain compensation module (148) comprises a first real-valued multiplier and a second real-valued multiplier and said number of coefficients comprise an in-phase gain coefficient (GI) and a quadrature gain coefficient (GQ), said first real-valued multiplier being configured to multiply an in-phase component of an incoming symbol by said in-phase gain coefficient (GI), and said second real-valued multiplier being configured to multiply a quadrature component of an incoming symbol by said quadrature gain coefficient (GQ).

**10.** The apparatus (136; 236; 336; 436) according to claim 7, wherein said phase skew compensation module (149) comprises four real-valued multipliers and two adders and said number of coefficients comprise four coefficients (h11, h12, h21, h22), said four real-valued multipliers being configured to multiply an in-phase component (I''(k)) and a quadrature component (Q''(k)) of an incoming symbol by said four coefficients (h11, h12, h21, h22) and to add the products of said multiplications for providing an in-phase component (I_o(k)) and a quadrature component (Q_o(k)) of an output symbol according to the following equations:

$$I\_o(k)=h11 \cdot I''(k)+h21 \cdot Q''(k)$$

$$Q\_o(k)=h12 \cdot I''(k)+h22 \cdot Q''(k)$$

wherein h11, h21, h12, h22 are said four coefficients, I''(k) is said in-phase component, Q''(k) is said quadrature component and I_o(k) is said in-phase component of the output symbol and Q_o(k) is said quadrature component of said output symbol.

**11.** The apparatus (436) according to claim 1, wherein said quadrature imbalance compensation circuit (460) is configured to compute metric information for a soft-decision FEC decoding.

**12.** The apparatus (136; 236; 336) according to claim 1, wherein it further comprises a phase restoring module (146; 246; 359) configured to perform an inverse operation with respect to said phase correcting module (142; 242; 358).

**13.** A digital processing unit (133) for an optical coherent receiver (100) for a node of an optical network, said digital processing unit (133) comprising a demodulator comprising a frequency estimation block and a phase estimation block, and an apparatus according to claim 1 for compensating transmitter quadrature imbalances over an optical signal (S(t)) received at the optical coherent receiver (100).

**14.** The digital processing unit (133) according to claim 13, wherein said apparatus is arranged within said digital processing unit (133) after the phase estimation block (135b) of the demodulator (135; 435).

**15.** The digital processing unit according to claim 13, wherein said apparatus is arranged within said digital processing unit before the phase estimation block (235b) of the demodulator.

**16.** The digital processing according to claim 13, wherein a first portion (354) of said apparatus (336) is arranged within said digital processing unit (133) before the demodulator (335) and a second portion of said apparatus (336) is arranged within said digital processing unit (133) after the demodulator (335), wherein said first portion (354) comprises a first portion (343a) of said quadrature imbalance compensation circuit comprising an offset compensation module (347) configured to correct a transmitter quadrature dc-offset imbalance, and said second portion (355) comprises a second portion (343b) of said quadrature imbalance compensation circuit comprising a gain compensation module (348) configured to correct a transmitter quadrature gain imbalance and a phase skew compensation module (349) configured to correct a transmitter quadrature phase imbalance.

**17.** An optical coherent receiver (100) comprising a digital processing unit (133) according to any of claims 13 to 16.

**18.** A method for compensating transmitter quadrature imbalances over an optical signal (S(t)) received at an optical coherent receiver (100) of a node of an optical communication network, said optical signal (S(t)) comprising a sequence of symbols comprising received information symbols and received pilot symbols, the method comprising:

- estimating a phase error between a received pilot symbol (Zdp(k)) and a corresponding pilot symbol of a sequence of reference pilot symbols (P(k));
- removing said phase error from said received pilot symbol (Zdp(k)) and a number of received information symbols associated with said received pilot symbol;
- estimating said transmitter quadrature imbalances on the basis of at least said phase-corrected pilot symbol; and
- compensating said detected transmission quadrature imbalances over said number of phase-corrected information symbols.

**19.** A computer program product comprising computer-executable instructions for performing, when the program is run on a computer, the steps of the method according to claim 18.

**Patentansprüche**

**1.** Vorrichtung (136; 236; 336; 436) zum Ausgleich von Senderquadraturungleichgewichten über ein optisches Signal (S(t)), das an einem kohärenten optischen Empfänger (100) eines Knotens eines optischen Kommunikationsnetzwerks empfangen wird, wobei das besagte optische Signal (S(t)) eine Sequenz von Symbolen umfasst, die empfangene Informationssymbole und empfangene Pilotsymbole umfassen, wobei der besagte Empfänger (100) konfiguriert ist, eine Sequenz von Referenzpilotsymbolen zu speichern, wobei die Vorrichtung (136, 236, 336, 436) Folgendes umfasst:

- eine absolute Phasenschätzungsschaltung (141; 251; 341, 351; 441), die konfiguriert ist, einen Phasenfehler zwischen einem empfangenen Pilotsymbol (Zdp(k) und einem entsprechenden Pilotsymbol der besagten Sequenz von Referenzpilotsymbolen (P(k)) zu schätzen;
- ein Phasenkorrekturmodul (142; 242; 358; 442), das konfiguriert ist, den besagten Phasenfehler von dem besagten empfangenen Pilotsymbol (Zdp(k)) und einer Anzahl von empfangenen Informationssymbolen, die zu dem besagten empfangenen Pilotsymbol zugehörig sind, zu entfernen;
- eine Quadraturungleichgewichtserkennungsschaltung (145; 245; 345; 445), die konfiguriert ist, die besagten Senderquadraturungleichgewichte auf der Basis mindestens des besagten phasenkorrigierten Pilotsymbols zu schätzen; und
- eine Quadraturungleichgewichtsausgleichsschaltung (143; 243; 347, 348, 349; 460), die konfiguriert ist, die besagten geschätzten Sendequadraturungleichgewichte über die besagte Anzahl von phasenkorrigierten Informationssymbolen auszugleichen.

**2.** Vorrichtung (136; 336; 436) nach Anspruch 1, wobei die besagte absolute Phasenschätzungsschaltung (141; 341; 441) einen Schätzer für die wahrscheinlichste Sequenz basierend auf dem Viterbi-Algorithmus umfasst.

**3.** Vorrichtung (136; 336; 436) nach Anspruch 1, wobei die besagte absolute Phasenschätzungsschaltung (141; 341; 441) einen Detektor für die höchste A-posteriori-Wahrscheinlichkeit umfasst.

**4.** Vorrichtung (236; 336) nach Anspruch 1, wobei die besagte absolute Phasenschätzungsschaltung (251; 351) einen komplexen Multiplikator (252) und einen Filter (253) umfasst, wobei der besagte komplexe Multiplikator (252) konfiguriert ist, eingehende Symbole (Ze(k)) mit einer komplex Konjugierten einer mit Nullen aufgefüllten Sequenz von Referenzpilotsymbolen zu multiplizieren, um eine Differenz zwischen der Phase von eingehenden Pilotsymbolen und der Phase der entsprechenden Referenzpilotsymbole (Pk)) zu berechnen, und wobei der Filter (253) ein Interpolationsfilter mit geleitendem Durchschnitt ist, der konfiguriert ist, eine daraus resultierende Sequenz zu filtern.

5. Vorrichtung (136; 236; 336; 436) nach Anspruch 1, wobei das besagte Phasenkorrekturmodul (142; 242; 358; 442) einen komplexen Multiplikator umfasst, der konfiguriert ist, eingehende Symbole (Zd(k), Ze(k)), mit einer komplexen Zahl zu multiplizieren, deren Argument der besagte Phasenfehler ist.

6. Vorrichtung (136; 236; 336; 436) nach Anspruch 1, wobei die besagte Quadraturungleichgewichtsausgleichsschaltung (143) und die besagte Quadraturungleichgewichterkennungsschaltung (145) einen adaptiven Entzerrer mit Entscheidungsrückkopplung implementieren, wobei die besagte Quadraturungleichgewichterkennungsschaltung (145, 245, 345, 445) konfiguriert ist, eine Anzahl von Koeffizienten zu aktualisieren, die in der besagten Quadraturungleichgewichtsausgleichsschaltung (143) verwendet werden.

7. Vorrichtung (136; 236; 336; 436) nach Anspruch 6, wobei die besagte Quadraturungleichgewichtsausgleichsschaltung (143; 243; 343a, 343b) ein Offset-Ausgleichsmodul (147), das konfiguriert ist, ein Senderquadratur-DC-Offset-Ungleichgewicht zu korrigieren, ein Verstärkungsausgleichsmodul (148), das konfiguriert ist, ein Senderquadraturverstärkungsungleichgewicht zu korrigieren, und ein Phasenversatzausgleichsmodul (149), das konfiguriert ist, ein Senderquadraturphasenungleichgewicht zu korrigieren, umfasst.

8. Vorrichtung (136; 236; 336; 436) nach Anspruch 7, wobei das besagte Offset-Ausgleichsmodul (147) einen ersten reellwertigen Addierer und einen zweiten reellwertigen Addierer umfasst und die besagte Anzahl von Koeffizienten einen In-Phase-Offset-Koeffizienten (dcI) und einen Quadratur-Offset-Koeffizienten (dcQ) umfasst, wobei der besagte erste reellwertige Addierer konfiguriert ist, den besagten In-Phase-Offset-Koeffizienten (dcI) zu einer In-Phase-Komponente (I'(k)) eines eingehenden Symbols (Z'(k), Ze(k)) zu addieren, und wobei der besagte zweite reellwertige Addierer konfiguriert ist, den besagten Quadratur-Offset-Koeffizienten (dcQ) zu einer Quadraturkomponente (Q'(k)) des besagten eingehenden Symbols (Z'(k), Ze(k)) zu addieren.

9. Vorrichtung (136; 236; 336; 436) nach Anspruch 7, wobei das besagte Verstärkungsausgleichsmodul (148) einen ersten reellwertigen Multiplikator und einen zweiten reellwertigen Multiplikator umfasst und die besagte Anzahl von Koeffizienten einen In-Phase-Verstärkungskoeffizienten (G1) und einen Quadraturverstärkungskoeffizienten (GQ) umfasst, wobei der besagte erste reellwertige Multiplikator konfiguriert ist, eine In-Phase-Komponente eines eingehenden Symbols mit dem besagten In-Phase-Verstärkungskoeffizienten (GI) zu multiplizieren, und wobei der besagte zweite reellwertige Multiplikator konfiguriert ist, eine Quadraturkomponente eines eingehenden Symbols mit dem besagten Quadraturverstärkungskoeffizienten (GQ) zu multiplizieren.

10. Vorrichtung (136; 236; 336; 436) nach Anspruch 7, wobei das besagte Phasenversatzausgleichsmodul (149) vier reellwertige Multiplikatoren und zwei Addierer umfasst und die besagte Anzahl von Koeffizienten vier Koeffizienten (h11, h12, h21, h22) umfasst, wobei die besagten vier reellwertigen Multiplikatoren konfiguriert sind, eine In-Phase-Komponente (I"(k)) und eine Quadraturkomponente (Q"(k)) eines eingehenden Symbols mit den besagten vier Koeffizienten (h11, h12, h21, h22) zu multiplizieren und die Produkte der besagten Multiplikationen zu addieren, um eine In-Phase-Komponente (I_o(k)) und eine Quadraturkomponente (Q_o(k)) eines Ausgangssymbols gemäß den folgenden Gleichungen bereitzustellen:

$$I\_o(k) = h11 * I"(k) + h21 * Q"(k)$$

$$Q\_o(k) = h12 * I"(k) + h22 * Q"(k)$$

wobei h11, h21, h12, h22 die besagten vier Koeffizienten sind, I"(k) die besagte In-Phase-Komponente ist, Q"(k) die besagte Quadraturkomponente ist und I_o(k) die besagte In-Phase-Komponente des Ausgangssymbols ist und Q_o(k) die besagte Quadraturkomponente des besagten Ausgangssymbols ist.

11. Vorrichtung (436) nach Anspruch 1, wobei die besagte Quadraturungleichgewichtsausgleichsschaltung (460) konfiguriert ist, metrische Informationen für eine Soft-Entscheidungs-FEC-Decodierung zu berechnen.

12. Vorrichtung (136; 236; 336) nach Anspruch 1, wobei sie weiterhin ein Phasenwiederherstellungsmodul (146; 246;

359) umfasst, das konfiguriert ist, einen umgekehrten Vorgang in Bezug auf das besagte Phasenkorrekturmodul (142; 242; 358) durchzuführen.

**13.** Digitale Verarbeitungseinheit (133) für einen kohärenten optischen Empfänger (100) für einen Knoten eines optischen Netzwerks, wobei die besagte digitale Verarbeitungseinheit (133) einen Demodulator umfasst, der einen Frequenzschätzungsblock und einen Phasenschätzungsblock umfasst, und eine Vorrichtung nach Anspruch 1 zum Ausgleich von Senderquadraturungleichgewichten über ein optisches Signal (S(t)), das an dem kohärenten optischen Empfänger (100) empfangen wird.

**14.** Digitale Verarbeitungseinheit (133) nach Anspruch 13, wobei die besagte Vorrichtung innerhalb der besagten digitalen Verarbeitungseinheit (133) nach dem Phasenschätzungsblock (135b) des Demodulators (135; 435) angeordnet ist.

**15.** Digitale Verarbeitungseinheit nach Anspruch 13, wobei die besagte Vorrichtung innerhalb der besagten digitalen Verarbeitungseinheit vor dem Phasenschätzungsblock (235b) des Demodulators angeordnet ist.

**16.** Digitale Verarbeitungseinheit nach Anspruch 13, wobei ein erster Abschnitt (354) der besagten Vorrichtung (336) innerhalb der besagten digitalen Verarbeitungseinheit (133) vor dem Demodulator (335) angeordnet ist und ein zweiter Abschnitt der besagten Vorrichtung (336) innerhalb der besagten digitalen Verarbeitungseinheit (133) nach dem Demodulator (335) angeordnet ist, wobei der besagte erste Abschnitt (354) einen ersten Abschnitt (343a) der besagten Quadraturungleichgewichtsausgleichsschaltung umfasst, die ein Offset-Ausgleichsmodul (347) umfasst, das konfiguriert ist, ein Senderquadratur-DC-Offset-Ungleichgewicht zu korrigieren, und wobei der besagte zweite Abschnitt (355) einen zweiten Abschnitt (343b) der besagten Quadraturungleichgewichtsausgleichsschaltung umfasst, die ein Verstärkungsausgleichsmodul (348), das konfiguriert ist, ein Senderquadraturverstärkungsungleichgewicht zu korrigieren, und ein Phasenversatzausgleichsmodul (349), das konfiguriert ist, ein Senderquadraturphasenungleichgewicht zu korrigieren, umfasst.

**17.** Kohärenter optischer Empfänger (100), der eine digitale Verarbeitungseinheit (133) nach einem der Ansprüche 13 bis 16 umfasst.

**18.** Verfahren zum Ausgleich von Senderquadraturungleichgewichten über ein optisches Signal (S(t)), das an einem kohärenten optischen Empfänger (100) eines Knotens eines optischen Kommunikationsnetzwerks empfangen wird, wobei das besagte optische Signal (S(t)) eine Sequenz von Symbolen umfasst, die empfangene Informationssymbole und empfangene Pilotsymbole umfassen, wobei das Verfahren Folgendes umfasst:

- Schätzen eines Phasenfehlers zwischen einem empfangenen Pilotsymbol (Zdp(k)) und einem entsprechenden Pilotsymbol einer Sequenz von Referenzpilotsymbolen (P(k));
- Entfernen des besagten Phasenfehlers von dem besagten empfangenen Pilotsymbol (Zdp(k)) und einer Anzahl von empfangenen Informationssymbolen, die zu dem besagten empfangenen Pilotsymbol zugehörig sind;
- Schätzen der besagten Senderquadraturungleichgewichte auf der Basis mindestens des besagten phasenkorrigierten Pilotsymbols; und
- Ausgleichen der besagten erkannten Sendequadraturungleichgewichte über die besagte Anzahl von phasenkorrigierten Informationssymbolen.

**19.** Computerprogrammprodukt, umfassend computerausführbare Anweisungen zum Durchführen der Schritte des Verfahrens nach Anspruch 18, wenn das Programm auf einem Computer gestartet wird.

## Revendications

**1.** Appareil (136 ; 236 ; 336 ; 436) pour compenser des déséquilibres en quadrature d'émetteur sur un signal optique (S(t)) reçu au niveau d'un récepteur cohérent optique (100) d'un noeud d'un réseau de communication optique, ledit signal optique (S(t)) comprenant une séquence de symboles comprenant des symboles d'informations reçus et des symboles pilotes reçus, ledit récepteur (100) étant configuré pour stocker une séquence de symboles pilotes de référence, l'appareil (136, 236, 336, 436) comprenant :

- un circuit d'estimation de phase absolue (141 ; 251 ; 341 ; 351 ; 441) configuré pour estimer une erreur de phase entre un symbole pilote reçu (Zdp(k)) et un symbole pilote correspondant de ladite séquence de symboles pilotes de référence (P(k)) ;
- un module de correction de phase (142 ; 242 ; 358 ; 442) configuré pour supprimer ladite erreur de phase dudit symbole pilote reçu (Zdp(k)) et d'un nombre de symboles d'informations reçus associés audit symbole pilote reçu ;
- un circuit de détection de déséquilibre en quadrature (145 ; 245 ; 345 ; 445) configuré pour estimer lesdits déséquilibres en quadrature d'émetteur sur la base d'au moins ledit symbole pilote à phase corrigée ; et
- un circuit de compensation de déséquilibre en quadrature (143 ; 243 ; 347 ; 348 ; 349 ; 460) configuré pour compenser lesdits déséquilibres en quadrature d'émission estimés sur ledit nombre de symboles d'informations à phase corrigée.

2. Appareil (136; 336; 436) selon la revendication 1, dans lequel ledit circuit d'estimation de phase absolue (141 ; 341 ; 441) comprend un estimateur de séquence à vraisemblance maximale basé sur l'algorithme de Viterbi.

3. Appareil (136; 336; 436) selon la revendication 1, dans lequel ledit circuit d'estimation de phase absolue (141 ; 341 ; 441) comprend un détecteur de probabilité a posteriori maximum.

4. Appareil (236 ; 336) selon la revendication 1, dans lequel ledit circuit d'estimation de phase absolue (251 ; 351) comprend un multiplicateur complexe (252) et un filtre (253), ledit multiplicateur complexe (252) étant configuré pour multiplier des symboles entrants (Ze(k)) avec un conjugué complexe d'une séquence de symboles pilotes de référence à remplissage de zéros (P(k)) pour calculer une différence entre la phase de symboles pilotes entrants et la phase des symboles pilotes de référence correspondants (P(k)), et dans lequel le filtre (253) est un filtre d'interpolation à moyenne mobile configuré pour filtrer une séquence résultante.

5. Appareil (136 ; 236 ; 336 ; 436) selon la revendication 1, dans lequel ledit module de correction de phase (142 ; 242 ; 358 ; 442) comprend un multiplicateur complexe configuré pour multiplier des symboles entrants (Zd(k), Ze(k)) par un nombre complexe dont l'argument est ladite erreur de phase.

6. Appareil (136 ; 236 ; 336 ; 436) selon la revendication 1, dans lequel ledit circuit de compensation de déséquilibre en quadrature (143) et ledit circuit de détection de déséquilibre en quadrature (145) implémentent un égaliseur adaptatif à rétroaction de décision dans lequel ledit circuit de détection de déséquilibre en quadrature (145, 245, 345, 445) est configuré pour mettre à jour un nombre de coefficients utilisés dans ledit circuit de compensation de déséquilibre en quadrature (143).

7. Appareil (136 ; 236 ; 336 ; 436) selon la revendication 6, dans lequel ledit circuit de compensation de déséquilibre en quadrature (143 ; 243 ; 343a, 343b) comprend un module de compensation de décalage (147) configuré pour corriger un déséquilibre de décalage c.c. en quadrature d'émetteur, un module de compensation de gain (148) configuré pour corriger un déséquilibre de gain en quadrature d'émetteur, et un module de compensation de biais de phase (149) configuré pour corriger un déséquilibre de phase en quadrature d'émetteur.

8. Appareil (136 ; 236 ; 336 ; 436) selon la revendication 7, dans lequel ledit module de compensation de décalage (147) comprend un premier additionneur à valeur réelle et un second additionneur à valeur réelle et ledit nombre de coefficients comprend un coefficient de décalage en phase (dcl) et un coefficient de décalage en quadrature (dcQ), ledit premier additionneur à valeur réelle étant configuré pour ajouter ledit coefficient de décalage en phase (dcl) à une composante en phase (l'(k)) d'un symbole entrant (Z'(k), Ze(k)), et ledit second additionneur à valeur réelle étant configuré pour ajouter ledit coefficient de décalage en quadrature (dcQ) à une composante en quadrature (Q'(k)) dudit symbole entrant (Z'(k), Ze(k)).

9. Appareil (136 ; 236 ; 336 ; 436) selon la revendication 7, dans lequel ledit module de compensation de gain (148) comprend un premier multiplicateur à valeur réelle et un second multiplicateur à valeur réelle et ledit nombre de coefficients comprend un coefficient de gain en phase (GI) et un coefficient de gain en quadrature (GQ), ledit premier multiplicateur à valeur réelle étant configuré pour multiplier une composante en phase d'un symbole entrant par ledit coefficient de gain en phase (GI), et ledit second multiplicateur à valeur réelle étant configuré pour multiplier une composante en quadrature d'un symbole entrant par ledit coefficient de gain en quadrature (GQ).

10. Appareil (136 ; 236 ; 336 ; 436) selon la revendication 7, dans lequel ledit module de compensation de biais de phase (149) comprend quatre multiplicateurs à valeur réelle et deux additionneurs et ledit nombre de coefficients comprend quatre coefficients (h11, h12, h21, h22), lesdits quatre multiplicateurs à valeur réelle étant configurés pour multiplier une composante en phase (l''(k)) et une composante en quadrature (Q''(k)) d'un symbole entrant par lesdits quatre coefficients (h11, h12, h21, h22) et pour additionner les produits desdites multiplications pour fournir une composante en phase (I_o(k)) et une composante en quadrature (Q_o(k)) d'un symbole de sortie selon les équations suivantes :

$$I\_o(k)=h11 \cdot I''(k)+h21 \cdot Q''(k)$$

$$Q\_o(k)=h12 \cdot I''(k)+h22 \cdot Q''(k)$$

où h11, h21, h12, h22 sont lesdits quatre coefficients, I''(k) est ladite composante en phase, Q''(k) est ladite composante en quadrature et I_o(k) est ladite composante en phase du symbole de sortie et Q_o(k) est ladite composante en quadrature dudit symbole de sortie.

11. Appareil (436) selon la revendication 1, dans lequel ledit circuit de compensation de déséquilibre en quadrature (460) est configuré pour calculer des informations métriques pour un décodage FEC à décision douce.

12. Appareil (136; 236; 336) selon la revendication 1, dans lequel il comprend en outre un module de restauration de phase (146 ; 246 ; 359) configuré pour effectuer une opération inverse par rapport audit module de correction de phase (142 ; 242 ; 358).

13. Unité de traitement numérique (133) pour un récepteur cohérent optique (100) pour un noeud d'un réseau optique, ladite unité de traitement numérique (133) comprenant un démodulateur comprenant un bloc d'estimation de fréquence et un bloc d'estimation de phase, et un appareil selon la revendication 1 pour compenser des déséquilibres en quadrature d'émetteur sur un signal optique (S(t)) reçu au niveau du récepteur cohérent optique (100).

14. Unité de traitement numérique (133) selon la revendication 13, dans laquelle ledit appareil est agencé à l'intérieur de ladite unité de traitement numérique (133) après le bloc d'estimation de phase (135b) du démodulateur (135 ; 435).

15. Unité de traitement numérique selon la revendication 13, dans laquelle ledit appareil est agencé à l'intérieur de ladite unité de traitement numérique avant le bloc d'estimation de phase (235b) du démodulateur.

16. Unité de traitement numérique selon la revendication 13, dans laquelle une première partie (354) dudit appareil (336) est agencée à l'intérieur de ladite unité de traitement numérique (133) avant le démodulateur (335) et une seconde partie dudit appareil (336) est agencée à l'intérieur de ladite unité de traitement numérique (133) après le démodulateur (335), dans laquelle ladite première partie (354) comprend une première partie (343a) dudit circuit de compensation de déséquilibre en quadrature comprenant un module de compensation de décalage (347) configuré pour corriger un déséquilibre de décalage c.c. en quadrature d'émetteur, et ladite seconde partie (355) comprend une seconde partie (343b) dudit circuit de compensation de déséquilibre en quadrature comprenant un module de compensation de gain (348) configuré pour corriger un déséquilibre de gain en quadrature d'émetteur et un module de compensation de biais de phase (349) configuré pour corriger un déséquilibre de phase en quadrature d'émetteur.

17. Récepteur cohérent optique (100) comprenant une unité de traitement numérique (133) selon l'une quelconque des revendications 13 à 16.

18. Procédé pour compenser des déséquilibres en quadrature d'émetteur sur un signal optique (S(t)) reçu au niveau d'un récepteur cohérent optique (100) d'un noeud d'un réseau de communication optique, ledit signal optique (S(t)) comprenant une séquence de symboles comprenant des symboles d'informations reçus et des symboles pilotes reçus, le procédé comprenant les étapes suivantes :

- estimer une erreur de phase entre un symbole pilote reçu (Zdp(k)) et un symbole pilote correspondant d'une séquence de symboles pilotes de référence (P(k)) ;
- supprimer ladite erreur de phase dudit symbole pilote reçu (Zdp(k)) et d'un nombre de symboles d'informations reçus associés audit symbole pilote reçu ;
- estimer lesdits déséquilibres en quadrature d'émetteur sur la base d'au moins ledit symbole pilote à phase corrigée ; et
- compenser lesdits déséquilibres en quadrature d'émission détectés sur ledit nombre de symboles d'informations à phase corrigée.

19. Produit de programme informatique comprenant des instructions exécutables par ordinateur pour effectuer, lorsque le programme est exécuté sur un ordinateur, les étapes du procédé selon la revendication 18.

Fig. 1

135

134 | 135a | 135b | Zd(k) → | 136 | Zdc(k) → | 137 | 138

**Fig. 2**

Fig. 3

136

146

Zdc(k)

Z_o(k)

144

143

145

150

Z'(k)

142

141

Zdp(k)

140

135b

Zd(k)

EP 2 930 865 B1

Fig. 4

**Fig. 5a**

**Fig. 5b**

EP 2 930 865 B1

Fig. 5d

Fig. 5c

235b

Zec(k)

236

246

Z_o(k)

244

243

245

250

Z'(k)

242

Fig. 6

253

251

252

P(k)

Ze(k)

EP 2 930 865 B1

Fig. 7a

Fig. 7b

Fig. 8

EP 2 930 865 B1

EP 2 930 865 B1

Fig. 9

EP 2 930 865 B1

```
            start

              │
              ▼
  ┌──────────────────────────┐
  │  phase error estimation  │          1001
  └──────────────────────────┘

              │
              ▼
  ┌──────────────────────────┐
  │   phase error removal    │          1002
  └──────────────────────────┘

              │
              ▼
┌───────────────────────────────────────────┐
│ transmitter quadrature imbalance detection │   1003
└───────────────────────────────────────────┘

              │
              ▼
┌──────────────────────────────────────────────────┐
│ transmitter quadrature imbalance compensation     │   1004
└──────────────────────────────────────────────────┘

              │
              ▼
            end
```

## Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. PFAU ; S. HOFFMANN ; R. NOÉ.** Hardware-efficient coherent digital receiver concept with feedforward carrier recovery for M-QAM; constellations. *Journal of Lightwave Technology,* 15 April 2009, vol. 27 (8), 989-999
- **I. FATADIN ; S.J. SAVORY ; D. IVES.** Compensation of quadrature imbalance in an optical QPSK coherent receiver. *IEEE Photonics Technology Letters,* 15 October 2008, vol. 20 (20), 1733-1735

- Effect of hybrid IQ imbalance compensation in 27.3-Gbit/s direct-detection OFDM transmission. **AL AMIN A. et al.** Optical Fiber Communication - incudes post deadline papers, 2009, OFC 2009. IEEE, 22 March 2009, 1-3
- Pilot-symbols-aided carrier-phase recovery for 100-G PM-QPSK digital coherent receivers. **MAURIZIO MAGARINI et al.** IEEE Photonics Technology Letters. IEEE Service Center, 09 May 2012, vol. 24, 739-741
- Frequency estimation in intradyne reception. **A. LEVEN et al.** Photonics Technology Letters. IEEE, 2007, vol. 19, 366-368